(19) Europäisches Patentamt
European Patent Office
Office européen des brevets

(11) **EP 3 809 328 A1**

(12) **EUROPEAN PATENT APPLICATION**
published in accordance with Art. 153(4) EPC

(43) Date of publication:
**21.04.2021 Bulletin 2021/16**

(21) Application number: **19818522.5**

(22) Date of filing: **10.05.2019**

(51) Int Cl.:
***G06K 9/62*** *(2006.01)*

(86) International application number:
**PCT/CN2019/086372**

(87) International publication number:
**WO 2019/237860 (19.12.2019 Gazette 2019/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.06.2018 CN 201810622626**

(71) Applicant: **TENCENT TECHNOLOGY (SHENZHEN) COMPANY LIMITED**
**Shenzhen, Guangdong 518057 (CN)**

(72) Inventors:
• **WU, Baoyuan**
  **Shenzhen, Guangdong 518057 (CN)**
• **CHEN, Weidong**
  **Shenzhen, Guangdong 518057 (CN)**
• **LIU, Wei**
  **Shenzhen, Guangdong 518057 (CN)**

(74) Representative: **Eisenführ Speiser**
**Patentanwälte Rechtsanwälte PartGmbB**
**Postfach 31 02 60**
**80102 München (DE)**

(54) **IMAGE ANNOTATION METHOD AND DEVICE**

(57)    Disclosed by the embodiments of the present application are an image annotation method and device, which are used for extracting diverse and unique tag subsets and comprehensively describing an image. The method comprises: a terminal extracts from an image to be annotated a visual feature thereof by means of a generative adversarial network model; the terminal sequentially inputs M random noises into the generative adversarial network model; when a single random noise is inputted into the generative adversarial network model, the terminal performs determinantal point process (DPP) processing on the visual feature and the single random noise by means of the generative adversarial network model, so as to obtain N randomly selected tag subsets, and the terminal selects a unique tag subset from among the N randomly selected tag subsets by means of the generative adversarial network model; and after the M random noises are all inputted into the generative adversarial network model, the terminal outputs M unique tag subsets by means of the generative adversarial network model, the M tag subsets being diversified.

EP 3 809 328 A1

Extract a visual feature of an image that is to be annotated, through a generative adversarial network — 101

Input M pieces of random noise sequentially into the generative adversarial network model, where M is a positive integer — 102

Perform determinantal point process (DPP) processing on the visual feature and a piece of random noise through the generative adversarial network model to select N tag subsets randomly, and select a tag subset distinctness from the N randomly selected tag subsets through the generative adversarial network model, in a case that said piece of random noise is inputted into the generative adversarial network model, where N is a positive integer — 103

Output M tag subsets with distinctness through the generative adversarial network model, after all the M pieces of random noise are inputted into the generative adversarial network model, where there is diversity among the M tag subsets — 104

Figure 1

**Description**

This application claims priority to Chinese Patent Application No. 2018106226264, titled "METHOD AND APPARATUS FOR ANNOTATING IMAGE", filed on June 15, 2018 the China National Intellectual Property Administration, which is incorporated herein by reference in its entirety.

FIELD OF THE TECHNOLOGY

The present disclosure relates to the technical field of image annotation, and in particular, to a method and an apparatus for image annotation.

BACKGROUND OF THE DISCLOSURE

In automatic image annotation, it is required to express as much information as possible with few tags. A semantic relationship among the tags is fully considered, so that a result of the automatic annotation approximates that of manual annotation.
In related technology, a diverse image annotation (DIA) algorithm is provided for implementing image annotation. An objective of the DIA algorithm is to generate a tag subset and describe an image by using a limited quantity of tags. The DIA algorithm further explores candidate tags for a semantic hierarchy and a synonym, so as to select a proper semantic connection path. That is, tags that are similar in semantics are discarded during selection, so as to prevent coexistence of such tags when annotating an image. Thereby, it is necessary that the applied tags cover as much useful information as possible. Compared with a conventional task of image annotation, the DIA algorithm requires the tags to be both representative of image information and associated with each other, so as to reduce redundancy.
Although redundancy is reduced, the DIA algorithm in conventional technology gives incomplete description of images and cannot express the images accurately in semantics.

SUMMARY

A method and an apparatus for image annotation are provided according to embodiments of the present disclosure. Extracted tag subsets are diverse and distinct, achieving a comprehensive description on the image.
Technical solutions according to embodiments of the present disclosure are as follows.
According to one aspect, a method for image annotation is provided according to an embodiment of the present disclosure, including:

extracting, by a terminal, a visual feature of an image that is to be annotated, from the image through a generative adversarial network;

inputting, by the terminal, M pieces of random noise sequentially into the generative adversarial network model, where M is a positive integer;

in a case that any piece of random noise is inputted into the generative adversarial network model: performing, by the terminal, determinantal point process (DPP) processing on the visual feature and said piece of random noise through the generative adversarial network model to select N tag subsets randomly, and selecting, by the terminal, a tag subset with distinctness from the N randomly selected tag subsets through the generative adversarial network model, where N is a positive integer; and

outputting, by the terminal, M tag subsets with distinctness through the generative adversarial network model, after all the M pieces of random noise are inputted into the generative adversarial network model, where there is diversity among the M tag subsets.

According to another aspect, an apparatus for image annotation is further provide according to an embodiment of the present disclosure, where the apparatus is installed in a terminal, and includes:

a feature extraction module, configured to extract a visual feature of an image that is to be annotated, from the image through a generative adversarial network;

a noise input module, configured to input M pieces of random noise sequentially into the generative adversarial network model, where M is a positive integer;

a distinct-tag generation module, configured to: in a case that any piece of random noise is inputted into the generative adversarial network model, perform determinantal point process (DPP) processing on the visual feature and said piece of random noise through the generative adversarial network model to select N tag subsets randomly, and select a tag subset with distinctness from the N randomly selected tag subsets through the generative adversarial network model, where N is a positive integer; and

a diverse-tag generation module, configured to output M tag subsets with distinctness through the generative adversarial network model, after all the M pieces of random noise are inputted into the generative adversarial network model, where there is diversity among the M tag subsets.

In the above aspect, modules constituting the apparatus for image annotation may further perform steps described in the foregoing aspect and various possible implementations. Details may refer to the description of the foregoing aspect and various possible implementations.

According to another aspect, an apparatus for image annotation is provided according to an embodiment of the present disclosure, including a processor and a memory, where the memory stores an instruction, and the processor executes the instruction in the memory to configure the apparatus for image annotation to perform any method according to the foregoing aspect.

According to another aspect, a computer-readable storage medium is provided according to an embodiment of the present disclosure, where the computer-readable storage medium stores an instruction, and the instruction when run on a computer configures the computer to perform the method according to the foregoing aspect.

In embodiments of the present disclosure, the visual feature of the image that is to be annotated is first extracted from the image through the generative adversarial network, and the M pieces of random noise are sequentially inputted into the generative adversarial network model. In a case that any piece of random noise is inputted into the generative adversarial network model, the determinantal point process (DPP) processing is performed on the visual feature and said piece of random noise through the generative adversarial network model to select the N tag subsets randomly, and the tag subset with distinctness is selected from the N randomly selected tag subsets through the generative adversarial network model. After all the M pieces of random noise are inputted into the generative adversarial network model, the M tag subsets with distinctness are outputted through the generative adversarial network model, where there is diversity among the M tag subsets. In embodiments of the present disclosure, the DPP processing can be performed on the visual feature of the image and each single piece of random noise, the N randomly selected tag subsets are outputted, and the tag subset with distinctness can be selected from the N tag subsets. In a case that the M pieces of random noise are inputted into the generative adversarial network model, the tag subsets with distinctness that correspond to all M pieces of random noise, respectively, can be outputted. Thereby, multiple tag subsets with distinctness and diversity are finally generated. An effect approximating manual image annotation is provided, and the image is comprehensively described.

BRIEF DESCRIPTION OF THE DRAWINGS

For clearer illustration of the technical solutions according to embodiments of the present disclosure or conventional techniques, hereinafter are briefly described the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.

Figure 1 is a schematic flowchart of a method for image annotation according to an embodiment of the present disclosure;

Figure 2 is a schematic diagram of statistics on a quantity of tags included in a single tag subset according to an embodiment of the present disclosure;

Figure 3 is a schematic diagram of tag subsets used by different people for annotating a same image according to an embodiment of the present disclosure;

Figure 4 is a schematic diagram of calculating a correlation function according to an embodiment of the present disclosure;

Figure 5 is a schematic diagram of an area of a region formed by two vectors that correspond to a determinant of a correlation function according to an embodiment of the present disclosure;

Figure 6 is a schematic diagram of constructing a weighted semantic path (WSP) according to an embodiment of the present disclosure;

Figure 7 is a schematic diagram of a process of training a generative adversarial network model according to an embodiment of the present disclosure;

Figure 8-a is a schematic structural diagram of an apparatus for image annotation according to an embodiment of the present disclosure;

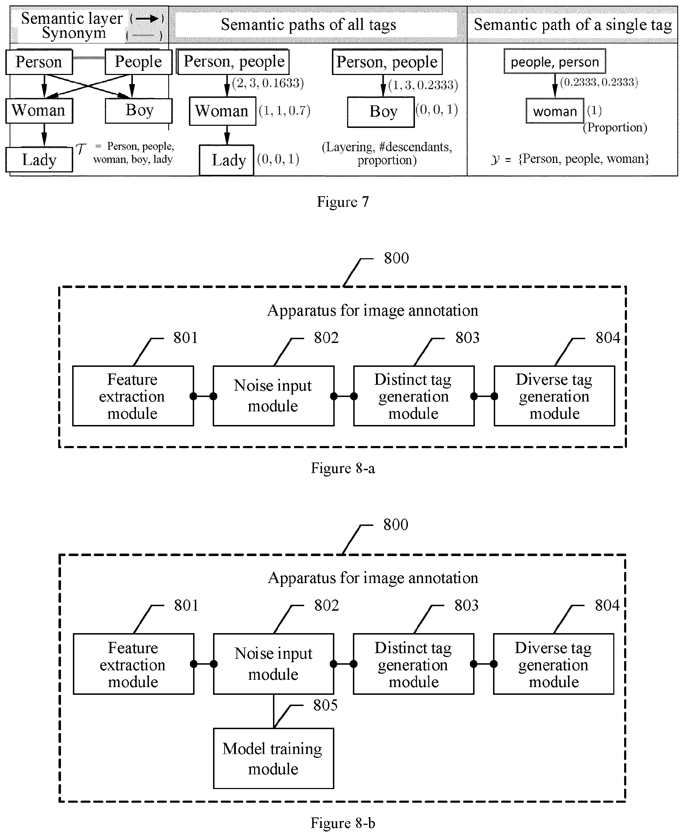

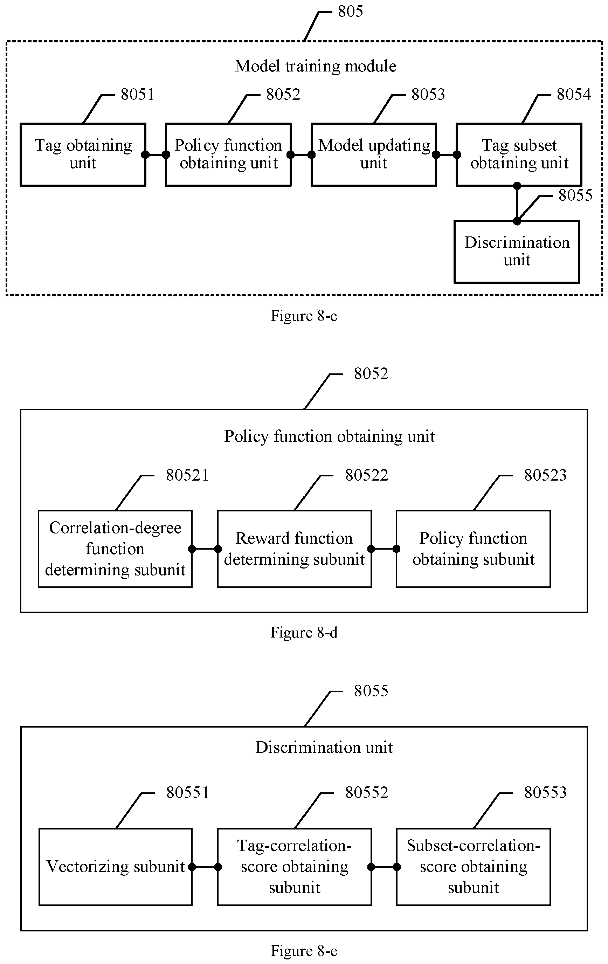

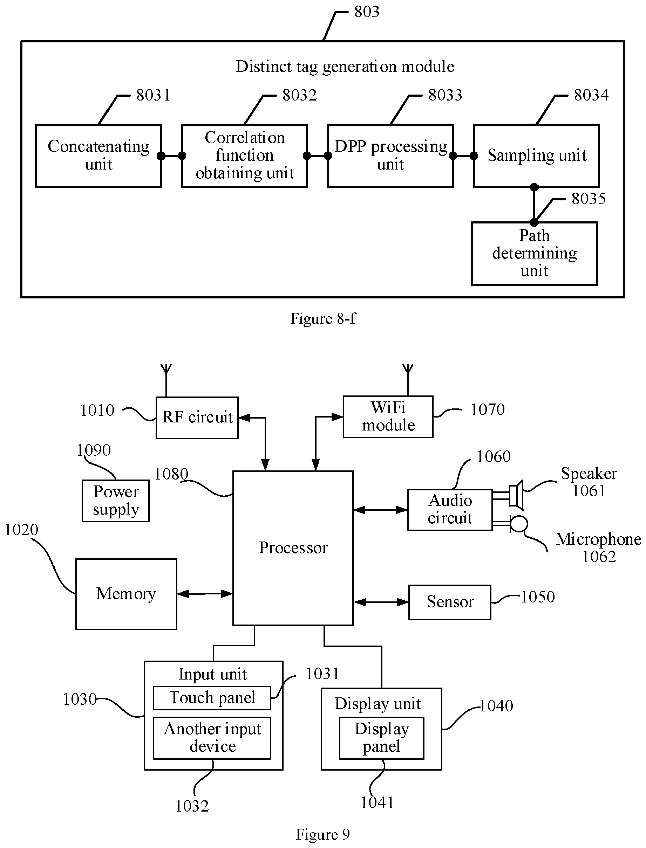

Figure 8-b is a schematic structural diagram of another apparatus for image annotation according to an embodiment of the present disclosure;

Figure 8-c is a schematic structural diagram of a model training module according to an embodiment of the present disclosure;

Figure 8-d is a schematic structural diagram of a policy-function obtaining unit according to an embodiment of the present disclosure;

Figure 8-e is a schematic structural diagram of a discrimination unit according to an embodiment of the present disclosure;

Figure 8-f is a schematic structural diagram of a distinct-tag generation module according to an embodiment of the present disclosure;

Figure 9 is a schematic structural diagram of a terminal to which a method for image annotation is applied according to an embodiment of the present disclosure; and

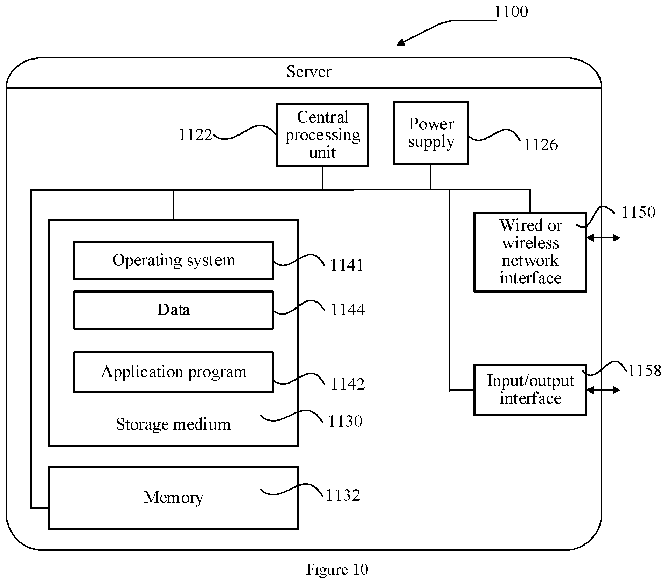

Figure 10 is a schematic structural diagram of a server to which an image annotation method is applied according to an embodiment of the present disclosure.

DESCRIPTION OF EMBODIMENTS

A method and an apparatus for image annotation are provided according to embodiments of the present disclosure. The method and the apparatus are configured to extract tag subsets with diversity and distinctness, so as to achieve comprehensive description on an image.

To make the object, technical solutions and advantages of the present application clearer, hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

The terms "include", "contain", and any variant thereof in the specification, claims, and accompanying drawings of the present disclosure are intended to cover a non-exclusive inclusion. Thereby, a process, a method, a system, a product, or a device that includes a series of units is not necessarily limited to those units, but may include another unit that is not expressly listed or is inherent to such process, method, product, or device.

Details are provided as follows.

A method for image annotation method is provided according to an embodiment of the present disclosure. In embodiments of the present disclosure, an image is annotated by multiple tag subsets with diversity and distinctness through a generative adversarial network model. The generative adversarial network model in embodiments of the present disclosure is provided with a diverse and distinct image annotation (D2IA) function. The generative adversarial network model is inspired by a result of manual image annotation, and defines a novel task of automatic image annotation. Thereby, a result of automatic annotation approximates a result of manual annotation. The multiple tag subsets with diversity and distinctness may be outputted from the generative adversarial network model that is trained in embodiments of the present disclosure. Thus, an effect approximating manual image annotation is provided, and the image is comprehensively described.

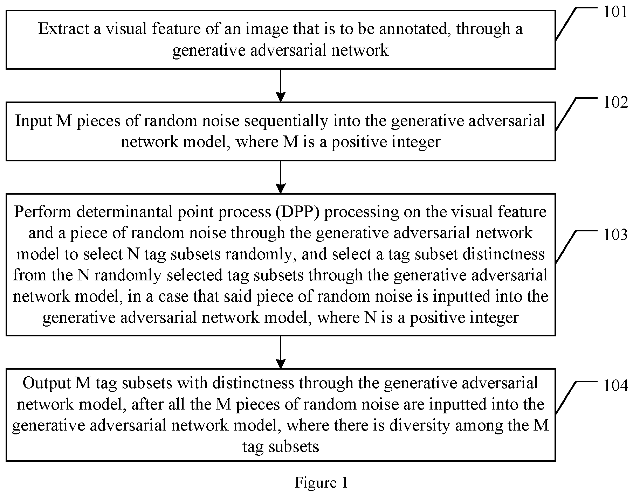

Reference is made to Figure 1, which is a method for image annotation according to an embodiment of the present disclosure. The method may include following steps 101 to 104.

In step 101, a terminal extracts a visual feature of an image that is to be annotated, through a generative adversarial network.

In embodiments of the present disclosure, the image that is to be annotated is an image for which a tag subset needs to be generated. The image may be inputted by a user via the terminal, or may be automatically acquired by the terminal. For example, the image is inputted into a generative adversarial network model after the terminal captures the image via a camera, according to an embodiment of the present disclosure.

In embodiments of the present disclosure, the generative adversarial network model needs to be trained in advance. The generative adversarial network model is provided with a D2IA function. After the terminal obtains the image that is to be annotated, the image is inputted into the generative adversarial network model. The generative adversarial network model is provided with a feature extraction function. For example, the generative adversarial network model includes a convolutional neural network (CNN). The visual feature of the image may be extracted through the CNN, and the visual feature may be represented by a feature vector. The visual feature extracted by the generative adversarial network model in embodiments of the present disclosure is not limited to a CNN feature. For example, the visual feature may include a scale invariant feature.

In step 102, the terminal inputs M pieces of random noise sequentially into the generative adversarial network model, where M is a positive integer.

In embodiments of the present disclosure, multiple pieces of random noise need to be sequentially inputted into the generative adversarial network model. For example, the letter "M" represents a quantity of pieces of noise inputted into the generative adversarial network model, and a value of M may be equal to or greater than 2, which is not limited herein.

In embodiments of the present disclosure, the random noise inputted into the generative adversarial network model may be mixed with the visual feature of the image. The pieces of random noise that are sequentially inputted are respectively mixed with the visual feature of the image. For example, after one piece of random noise is introduced into the generative adversarial network model, the visual feature of the inputted image is applied, and the terminal mixes the random noise with the visual feature through the generative adversarial network model. The multiple pieces of random noise inputted into the generative adversarial network model may be mixed with the visual feature of the same image in multiple mixing operations, respectively.

In embodiments of the present disclosure, the random noise is generated by accumulating a large amount of fluctuations and disturbances that are randomly generated in time. A value of the random noise is unpredictable at a specified moment. The random noise may be inputted into the generative adversarial network model, through random disturbances on the visual feature in the generative adversarial network model. A term of the random disturbance refers to an error due to uncertainty in data. Generally, it is assumed that each term of the random disturbance is independent, and has a normal distribution with an average of 0 and an identical variance. The random disturbance is added into the generative adversarial network model, and then a tag subset with distinctness is generated in step 103.

In step 103, the terminal performs determinantal point process (DPP) processing on the visual feature and a piece of random noise through the generative adversarial network model to select N tag subsets randomly, and selects a tag subset distinctness from the N randomly selected tag subsets through the generative adversarial network model, in a case that such piece of random noise is inputted into the generative adversarial network model, where N is a positive integer.

In embodiments of the present disclosure, each time a piece of random noise is inputted into the generative adversarial network model, the step 103 may be performed once. The step 103 needs to be performed for M times, for the M pieces of random noise that are sequentially inputted into the generative adversarial network model.

In the step 103, the terminal first performs the DPP processing on a single piece of random noise and the visual feature of the image, and then performs sampling, so as to generate a tag subset with distinctness. The distinctness refers to complying with a rule to avoid semantic redundancy among tags. That is, tags are distinct from each other in semantics, and are not redundant in semantics. In embodiments of the present disclosure, the DPP processing performed by the generative adversarial network model may be a conditional determinantal point process (cDPP), in which an image serves as a condition.

In embodiments of the present disclosure, the generative adversarial network model may implement the DPP processing on the single piece of random noise and the visual feature through a DPP model in the generative adversarial network model. An example is illustrated as follows. There is a sequence with a length of N, in which each element is selected randomly and equiprobably from an alphabet set S such as {0, 1, 2, 3... 9}. Starting from the second element in the sequence with the length of N, a sequential number of a position is picked out in a case that the element at such position is smaller than an element at a previous position, acquiring a subset of I = {1... N}. Thereby, each sequence with the length of N corresponds to one subset. There exists a determinant capable to characterize an occurrence probability of any said subset. A principal minor of the determinant, with a certain quantity of rows and columns, corresponds exactly to the occurrence probability of the subset. In such case, the above selection is called a determinantal process. Features with high quality and high diversity can be selected through the DPP processing.

In embodiments of the present disclosure, multiple tag subsets that are randomly selected may be outputted after the terminal completes the DPP processing through the generative adversarial network model. For example, a letter "N" represents a quantity of the randomly selected tag subsets. For example, a value of N is 10. In embodiments of the present disclosure, a DPP model may be set in the generative adversarial network model. The DPP model is a probability model, and randomness is provided by sampling according to the probability model. Accordingly, multiple different tag subsets can be generated.

The generative adversarial network model may output the N randomly selected tag subsets, after the terminal completes the DPP processing through the generative adversarial network model. Sampling is performed for the N tag subsets. Thereby, a tag subset with distinctness is selected from the N tag subsets. That is, in embodiments of the present disclosure, there is distinctness and no semantic redundancy among all tags in the tag subset selected through the generative adversarial network model.

In some embodiments of the present disclosure, the generative adversarial network model may implement the sampling on the N tag subsets by using use a weighted semantic path (WSP). The WSP is based on a semantic hierarchical relationship and synonyms among tags, and both the semantic hierarchical relationship and the synonyms may be acquired from the WordNet. A basic construction process of the WSP is as follows: (1) tracing upwards, from each node at a bottom layer (that is, each leaf node) in a diagram of the semantic hierarchical relationship, to find a path to a node at the top layer (that is, a root node), where two parent nodes are combined as one node in case of being synonymous; (2) calculating, for a path, a weight of each node according to a layer at which said node is located and a quantity of all nodes subordinating to said node in the diagram of semantic hierarchical relationship. As a basic concept, the weight of a node is greater in a case that such node expresses more precise information, that is, larger quantity of information.

In some embodiments of the present disclosure, that the terminal performs the DPP processing on the visual feature and the single piece of random noise through the generative adversarial network model to select N tag subsets randomly in the step 103 includes following steps.

The terminal concatenates a feature vector corresponding to the visual feature and a noise vector corresponding to the single piece of random noise, to obtain a concatenated hybrid vector.

The terminal obtains a correlation function according to a candidate tag set, where the correlation function is independent from the visual feature.

The terminal performs the DPP processing on the correlation function and the hybrid vector, through the generative adversarial network model, to obtain a probability distribution function.

The terminal performs sequential sampling according to the probability distribution function, to obtain a current tag and a sampled tag, where the sampled tag is obtained previous to the current tag in the sequential sampling.

The terminal determines, through a weighted semantic path (WSP), whether the current tag and the sampled tag are from a same semantic path.

The terminal discards the current tag and re-samples for the current tag, in a case that the current tag and the sampled tag are from the same semantic path. The terminal reserves the current tag and samples for a next tag, in a case that the current tag and the sampled tag are not from the same semantic path. The above two steps are repeated until a quantity of tags obtained through the sampling reaches a maximum tag quantity for a tag subset.

The terminal continues to repeat the sampling in a case that the quantity of tags obtained through the sampling reaches the maximum tag quantity for the tag subset, until the N tag subsets are obtained.

First, the terminal concatenates the feature vector and the noise vector. That is, the noise vector and the feature vector are mixed into one vector, which is defined as the hybrid vector. Then, the terminal obtains the correlation function independent from the visual feature of the image, and performs the DPP processing on the correlation function and the hybrid vector through the generative adversarial network model, to obtain the probability distribution function. The probability distribution function may be a DPP probability distribution. Afterwards, the terminal performs the sequential sampling according to the probability distribution function. In each step of the sampling, the terminal determines through the WSP whether the current tag that is newly obtained in the sampling and the sampled tag are from the same semantic path. The terminal discards the current tag and re-samples for the current tag in case of positive determination, and reserves the current tag and samples for a next tag in case of negative determination, until the quantity of tags obtained through the sampling reaches the maximum tag quantity of the tag subset. The terminal repeats the foregoing sampling process to continue sampling, in a case that the quantity of tags obtained through sampling reaches the maximum tag quantity for the tag subset, until the N tag subsets are obtained. As an example, a value of N may be 10.

In some embodiments of the present disclosure, that the terminal selects a tag subset with distinctness from the N randomly selected tag subsets through the generative adversarial network model in the step 103 includes following steps.

The terminal calculates a sum of weights corresponding to all tags in each of the N tag subsets, through the WSP, to obtain a total weight of tags corresponding to each of the N tag subsets.

The terminal selects a tag subset maximum in the total weight, as the tag subset with distinctiveness, according to the total weight of tags corresponding to each of the N tag subsets.

The WSP is applied to the sampling of the generative adversarial network model, and thereby it can be ensured that two tags from a same semantic path are not simultaneously selected in the sampling. For the multiple tag subsets obtained through sampling, a sum of weights of tags in each tag subset is calculated, and the tag subset that is maximum in weights is finally outputted. For example, a sum of weights of tags in each of the multiple tag subsets obtained through DPP sampling is calculated, and a tag subset maximum in weights serves as a final output. The tag subset with distinctness may be generated through the foregoing sampling process.

In some embodiments of the present disclosure, the generative adversarial network model includes a generative network model and a discriminative network model. The generative network model may be also known as a generator, and the discriminative network model may be also known as a discriminator. In embodiments of the present disclosure, the generative adversarial network model is trained in a following manner. Before the terminal extracts the visual feature of the image, which is to be annotated, from the image through the generative adversarial network, the method may include following steps according to an embodiment of the present disclosure.

The terminal obtains a sample image from a sample database.

The terminal extracts a sample visual feature from the sample image through the generative network model.

The terminal performs the DPP processing on the sample visual feature and a single piece of random noise through the generative network model, to select N sample tag subsets randomly.

The terminal selects a sample tag subset with distinctness from the N sample tag subsets through the generative network model.

The terminal trains the generative network model and the discriminative network model alternately, by using the sample tag subset and the visual feature of the image.

In embodiments of the present disclosure, the sample database may be set for training and discrimination of the generative adversarial network model. The sample database may include multiple sample images. For each sample image, a tag subset is acquired in advance by annotating said sample image manually. The visual feature of the sample image is extracted in a manner similar to description in the foregoing step 101, where the sample visual feature may be extracted through the generative network model. The generative network model may process the sample visual feature and a single piece of random noise according to the manner of the DPP processing in the step 103, to obtain the N sample tag subsets. Then, the generative network model may select the sample tag subset with distinctness according to the selection manner in the step 103. For example, the sampling of the generative network model may be based on the WSP. After the sample tag subset with distinctness is obtained, the generative network model and the discriminative network model are alternately trained based on such sample tag subset and the visual feature of the image. A manner of training the models alternately may refer to illustration in following embodiments, where a model configuration and a training manner for the generative network model and the discriminative network model are illustrated.

In some embodiments of the present disclosure, that the terminal trains the generative network model and the discriminative network model alternately by using the sample tag subset and the visual feature of the image includes following steps.

The terminal obtains, in current training for the generative network model, a sampled tag outputted by the generative network model in previous training.

The terminal obtains a policy function through a reinforcement learning algorithm, where the policy function is configured to measure a probability of outputting a next tag based on the sample image and the sampled tag by the generative network model.

The terminal updates the generative network model based on a gradient of the policy function.

The terminal obtains the sample tag subset with distinctness in the current training for the discriminative network model, where the sample tag subset with distinctness is outputted by the generative network model that has been trained in the current training.

The terminal performs discrimination on the sample tag subset and the sample visual feature through the discriminative network model, and outputs a result of the discrimination.

The generative network model and the discriminative network model are alternately trained. One training procedure (that is, the current training) is taken as an example. First, the generative network model is trained under a given discriminative network model. In the current training for the generative network model, the sampled tag outputted by the generative network model in previous training is obtained. A function of policy gradient (PG) in the reinforcement learning algorithm is utilized. A discrete sampling procedure is treated as a process of generating a sequence, and is controlled by a continuous policy function. The policy function is capable to measure the probability of selecting a next tag based on the image and the sampled tag. To simplify calculation, derivation may be performed on the policy function to obtain the gradient of the policy function. The generative network model may be updated based on the gradient value, through a back-propagation algorithm and a stochastic gradient descent algorithm.

After the current training for the generative network model is completed, the terminal trains the discriminative network model under the given generative network model. In the current training for the discriminative network model, the sample tag subset with distinctness outputted by the trained discriminative network model in the current training is obtained. That is, the currently updated generated network model may output a new sample tag subset. The sample tag subset and the sample visual feature are discriminated through the discriminative network model, and the result of discrimination is outputted. For example, it is calculated through a sigmoid function whether the sample tag subset and the sample visual feature are correlated with each other. The result "1" is outputted in a case that they are correlated, and the result "0" is outputted in a case that they are uncorrelated.

In some embodiments of the present disclosure, that the terminal obtains through the reinforcement learning algorithm the policy function configured to measure the probability of outputting the next tag based on the sample image and the sampled tag by the generative network model includes following steps.

The terminal determines a correlation-degree function between the sampled tag and the sample image through the generative network model.

The terminal obtains a reward function according to the correlation-degree function between the sampled tag and the sample image.

The terminal obtains the policy function according to the reward function and a marginal probability of selecting the next tag.

After the sampled tag is acquired, the terminal first calculates the correlation-degree function between the sampled tag and the sample image, and the correlation-degree function is determined through the generative network model. The correlation-degree function is a correlation matrix that is independent from the sample image. The reward function is calculated according to the correlation-degree function. The reward function encourages a high correlation between content of the sample image and the sample tag subset. Finally, the policy function is calculated through the reward function and the marginal probability. A detailed equation for calculation may refer to a reinforcement learning algorithm illustrated in following embodiments.

In some embodiments of the present disclosure, that the terminal performs discrimination on the sample tag subset and the visual feature of the image through the discriminative network model includes following steps.

The terminal vectorizes all sample tags in the sample tag subset, to obtain multiple sample tag vectors.

The terminal obtains correlation scores between the multiple sample tag vectors and a feature vector corresponding to the sample visual feature.

The terminal obtains a correlation score between the sample tag subset and the visual feature of the image, according to the correlation scores corresponding to the multiple sample tag vectors.

The terminal first vectorizes all sample tags in the sample tag subset. For example, a vector representation of each tag is obtained through a GloVe algorithm. That is, each word is represented by a numeric vector. The vector representation of each tag may be generated, after the tag subset generated by the generative network model is given. The feature vector corresponding to the sample visual feature is obtained. The correlation score between each sample tag vector and the feature vector is calculated. For example, a score in a range of [0, 1] is obtained through the sigmoid function, where 1 represents that the sample tag is completely correlated to the sample image, and 0 represents that the sample tag is completely uncorrelated to the sample image. Correlation scores between all the sample tags and the sample image are calculated, and an average of the correlation scores corresponding to all the sample tags in the sample tag subset is calculated as the correlation score between the sample tag subset and the sample image.

In step 104, the terminal outputs M tag subsets with distinctness through the generative adversarial network model, after all the M pieces of random noise are inputted into the generative adversarial network model, where there is diversity among the M tag subsets.

In embodiments of the present disclosure, each time a piece of random noise is inputted into the generative adversarial network model, the step 103 may be performed once. The step 103 needs to be performed for M times, for the M pieces of random noise that are sequentially inputted into the generative adversarial network model. Therefore, the M tag subsets with distinctness may be outputted through the generative adversarial network model after the M pieces of random noise are inputted into the generative adversarial network model, and there is diversity among the M tag subsets. In this embodiment of the present disclosure, the M pieces of random noise are inputted into the generative adversarial network model, and the tag subset with distinctness may be outputted for each different piece of random noise that is mixed with the visual feature of the image. Therefore, the generative adversarial network model according to embodiments of the present disclosure can finally output M tag subsets with distinctness and diversity. Different people with different focuses and different comprehension can be simulated through random disturbances generated by the M pieces of random noise. Such randomness further conforms to an inexorable rule in manual annotation, that is, different tag subsets are provided by different people. Hence, there is diversity among the outputted M tag subsets in embodiments of the present disclosure.

In embodiments of the present disclosure, the terminal first extracts the visual feature of the image that is to be annotated from the image through the generative adversarial network, and inputs the M pieces of random noise sequentially into the generative adversarial network model. In a case that any piece of random noise is inputted into the generative adversarial network model, the terminal performs the determinantal point process (DPP) processing on the visual feature and said piece of random noise through the generative adversarial network model to select the N tag subsets randomly, and selects the tag subset with distinctness from the N randomly selected tag subsets through the generative adversarial network model. After all the M pieces of random noise are inputted into the generative adversarial network model, the terminal outputs the M tag subsets with distinctness through the generative adversarial network model, where there is diversity among the M tag subsets. In embodiments of the present disclosure, the DPP processing can be performed on the visual feature of the image and each single piece of random noise, the N randomly selected tag subsets are outputted, and the tag subset with distinctness can be selected from the N tag subsets. In a case that the M pieces of random noise are inputted into the generative adversarial network model, the tag subsets with distinctness that correspond to all M pieces of random noise, respectively, can be outputted. Thereby, multiple tag subsets with distinctness and diversity are finally generated. An effect approximating manual image annotation is provided, and the image is comprehensively described.

Hereinafter a corresponding application scenario is taken as an example in specific illustration, for better understanding and implementation of solutions in the above embodiments of the present disclosure.

A method for image annotation according to an embodiment of the present disclosure is inspired by a result of manual image annotation, and defines a novel task of automatic image annotation. Thereby, a result of automatic annotation approximates a result of manual annotation. In embodiments of the present disclosure, a diverse and distinct image annotation-generative adversarial networks (D2IA-GAN) model is provided. Multiple tag subsets with diversity and distinctness can be automatically generated by using technologies such as the convolutional neural network (CNN), the generative adversarial network (GAN), the reinforcement learning (RL) and the determinantal point process sampling (DPP sampling).

In embodiment of the present disclosure, the terminal generates multiple different tag subsets through the D2IA-GAN model. Redundancy among tags in each tag subset is required to be little, and different tag subsets are required to cover semantic information that is as different as possible. Apparently, the tag subsets generated in embodiments of the present disclosure approximates manual annotation well. The D2IA-GAN model provided in embodiments of the present disclosure is completely different from a DIA model in conventional technology, and a training method is also different. The method for image annotation method according to embodiments of the present disclosure can generate a result approximating manual annotation better, in comparison with the DIA model in conventional technology. In terms of models, the D2IA-GAN model in embodiments of the present disclosure is based on a GAN model framework and includes a generator and a discriminator, while the DIA model merely serves as a part of the generator in the D2IA-GAN. In terms of objectives, the D2IA-GAN is configured to generate multiple tag subsets with diversity and distinctness, while the DIA can merely generate one tag subset with distinctness. In terms of training methods, the generator and the discriminator are iteratively trained for the D2IA-GAN model. During training of the generator, a derivative of a discrete sampling procedure is estimated through reinforcement learning in embodiments of the present disclosure. During training of the discriminator, a semantic F1 index (that is, a standard for evaluating a D2IA task) is embedded in this embodiment of the present disclosure, so as to guide the tag subsets generated by the entire model to approximate a result of manual annotation better. In contrast, training of the DIA model merely applies a standard stochastic gradient descent algorithm, and neither a discrete sampling process nor a semantic F1 index can be embedded into the training.

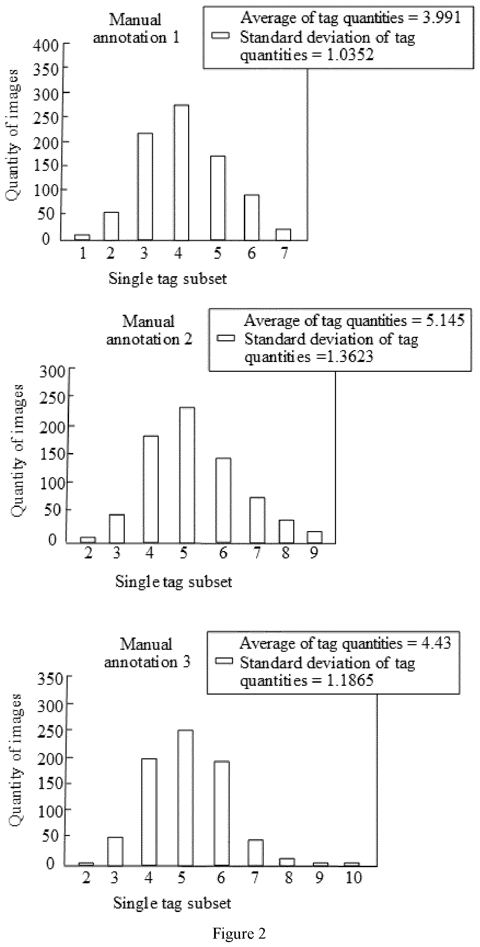

Figure 2 shows a schematic diagram of statistics on a quantity of tags included in a single tag subset according to an embodiment of the present disclosure. First, diversity and distinctness in manual image annotation are described. Characteristics of manual annotation are analyzed in this embodiment of the present disclosure. Specifically, former 1000 test images in a dataset IAPRTC-12 are selected, and three annotators are provided. The three annotators are separately required to annotate each image (where multiple tags are provided for each image). The only requirement is to "describe as much content in the image as possible by using as few tags as possible".

Three tag subsets from manual annotation are obtained for each image. A terminal performs statistics on an annotation result of each annotator, and statistical diagrams are obtained, as shown in Figure 2. In Figure 2, "mean" represents an average of quantities of tags, and "std" represents a standard deviation of the quantities of tags. In most cases, human can describe main content of an image by using few tags (a quantity of 3 to 5). Observation on each tag subset indicates that tags in a same tag subset usually describe different objects or content, and there are scarcely tags that are redundant in semantics. For example, the annotator usually does not annotate a horse in an image with both a tag "horse" and a tag "animal". Hence, a certain rule is followed in manual annotation, to avoid semantic redundancy among tags. Such rule is defined as distinctness among the tags. That is, tags are semantically distinct from each other, and there is no semantic redundancy among the tags.

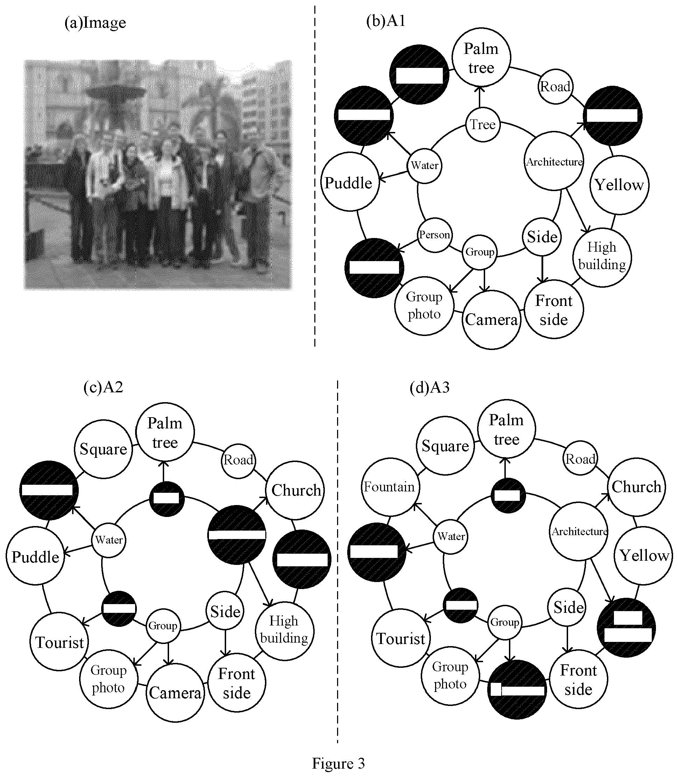

Meanwhile, the three tag subsets from manual annotation on the same image are compared and analyzed. It is rare that the three subsets or even two subsets are completely same. Different objects are concerned in different subsets. Different annotators may use different tags even for describing the same object, for example, use synonyms or use different semantic hierarchies describing the same object. An example of such phenomenon is shown Figure 3. The reason is that a focus, comprehension, and a degree of concentration during annotation differ among different annotators. Hence, there is an inexorable rule of manual annotation, that is, different tag subsets are provided by different annotators. Such rule is defined as the diversity of tag subsets. Figure 3 is a schematic diagram of tag subsets used by different people for annotating a same image according to an embodiment of the present disclosure. A1, A2, and A3 represent three annotators, and black circular nodes represent tags used for annotation.

Hereinafter diverse and distinct automatic image annotation is described according to an embodiment of the present disclosure. Inspired by rules of diversity and distinctness in manual annotation, a novel method for automatic image annotation is designed in this embodiment of the present disclosure, to simulate the distinctness and the diversity. Thereby, multiple tag subsets with diversity and distinctness can be automatically generated for an image, and the image is described more comprehensively.

A process of generating a tag subset with distinctness is first described. It is necessary to define and measure semantic redundancy among tags accurately, for a better simulation of distinctness among tags.

First, a conditional determinantal point process (cDPP) model is introduced. The cDPP model is a probability model, for describing a probability of selecting a subset from a universal set under a given condition. The model may be expressed as follows in mathematics.

$$\mathcal{P}(T|I) = \frac{\det\big(\mathbf{L}_T(I)\big)}{\det\big(\mathbf{L}_{\mathcal{T}}(I) + \mathbf{I}\big)},$$

$I$ represents an image, $T$ represents a tag subset, $\mathcal{T}$ represents a set of all candidate tags, I represents a unit matrix, and Det (L) represents a determinant of a matrix L. $\mathbf{L}_{\mathcal{T}}(I) \in \mathbb{R}^{|\mathcal{T}| \times |\mathcal{T}|}$ is a positive semi-definite kernel matrix, which includes a probability for a single tag and correlation information between tags. The matrix is expressed as follows:

$$\mathbf{L}_{ij}(\mathbf{x}; \mathbf{W}) = q_i(\mathbf{x})\boldsymbol{\phi}_i(\mathbf{x})^\top \boldsymbol{\phi}_j(\mathbf{x})q_j(\mathbf{x}),$$

W = [w$_1$ w$_2$ ... w$_m$] represents a quality parameter. $q_i(\mathbf{x}; \mathbf{w}_i) = \exp(0.5\mathbf{w}_i^\top \mathbf{x})$ represents a marginal probability of an ith tag. x represents a visual feature (extracted by using a CNN) of the image $I$. $\boldsymbol{\phi}_i(\mathbf{x}) \in \mathbb{R}^r$ is a normalized direction vector, that is, $\| \boldsymbol{\phi}_i(\mathbf{x}) \| = 1$. $\mathbf{S}(\mathbf{x}) = \boldsymbol{\Phi}^\top(\mathbf{x})\boldsymbol{\Phi}(\mathbf{x}) \in \mathbb{R}^{m \times m}$ represents a correlation matrix among tags, where $\mathbf{S}_{\mathcal{T}}(i,j) = \boldsymbol{\phi}_i^\top \boldsymbol{\phi}_j$. In this embodiment of the present disclosure, a correlation parameter independent of the visual feature x of the image is applied. The correlation parameter is defined as follows.

$$\mathbf{S}(i,j) = \frac{1}{2} + \frac{\langle \mathbf{t}_i, \mathbf{t}_j \rangle}{2\|\mathbf{t}_i\|_2 \|\mathbf{t}_j\|_2} \in [0,1] \ \forall \ i,j \in \mathcal{T},$$

$\mathbf{t}_i \in \mathbb{R}^{50}$ represents a catogory i that is vectorized, which is derived from the GloVe algorithm.

Therefore, $\mathcal{P}(T|I)$ may be rewritten as follows.

$$\mathcal{P}_{\mathbf{W}}(T|I) = \frac{\prod_{i \in T}[\exp(\mathbf{w}_i^\top \mathbf{x})]\det(\mathbf{S}_T)}{\sum_{T' \subset \mathcal{T}} \prod_{i \in T'}[\exp(\mathbf{w}_i^\top \mathbf{x})]\det(\mathbf{S}_{T'})},$$

$\mathbf{S}_T \in \mathbb{R}^{|T| \times |T|}$ and $\mathbf{S}_{T'} \in \mathbb{R}^{|T'| \times |T'|}$ and $\mathbf{S}_{T'} \in \mathbb{R}^{|T'| \times |T'|} \in$ represent submatrices of S, which correspond to a subset T and a subset T', respectively, of $\mathcal{T}$.

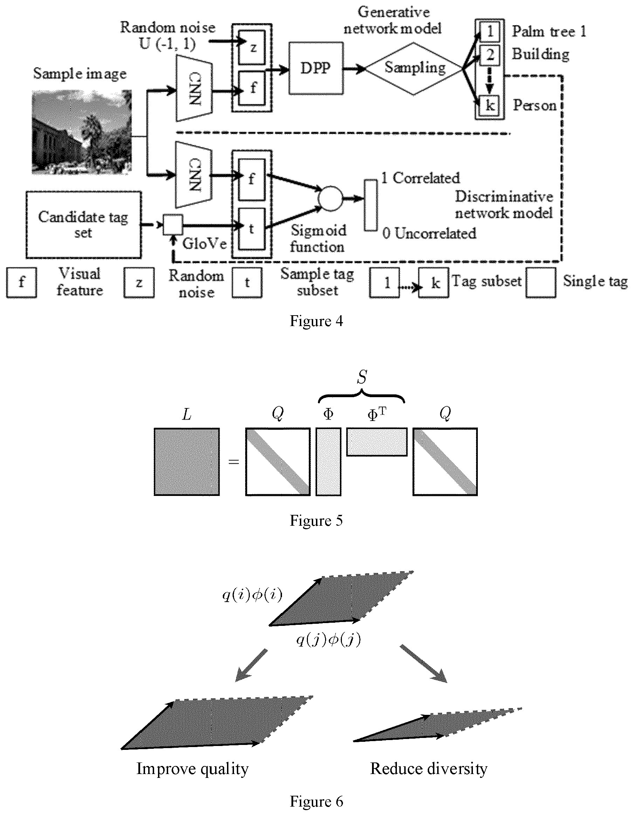

The matrix L and $\mathcal{P}_{\mathbf{W}}(T|I)$ are clearly defined in a geometrical manner, besides the foregoing mathematical definition. Reference is made to Figure 4, which is a schematic diagram of calculating a correlation function according to an embodiment of the present disclosure. L may be decomposed into a marginal probability matrix Q = diag (q1, ..., qm) and a similarity matrix S. Figure 5 is a schematic diagram of an area of a region formed by two vectors that correspond to a determinant of a correlation function according to an embodiment of the present disclosure. It can be seen from Figure 5 that a probability for a subset $T$ is reduced when there is high similarity between tags in $T$. Thereby, the cDPP model measures negative correlation among tags in a subset. That is, the cDPP model encourages tags in the same subset to be different from each other, that is, encourages the distinctness among tags.

Figure 6 is a schematic diagram of constructing a weighted semantic path (WSP) according to an embodiment of the present disclosure. A terminal encodes diversity and correlation through a DPP model, and a novel measurement in semantics may be defined through the WSP. That is, it is required that a quantity of paths is ensured, while a layer at which a corresponding word is located is as low as possible, namely, the word is specific. An example is shown in Figure 6. Both "person" and "people" are objects of a same category, and thereby co-occurrence of the two words is avoided as far as possible during discrimination. The deeper a descriptive word is located in a same path ("people"-"woman"-"lady"), the more specific the descriptive word is.

The WSP is defined based on a semantic hierarchical relationship and synonyms among the tags, and both the semantic hierarchical relationship and the synonyms may be obtained from the WordNet. A basic construction process of the WSP is as follows: (1) tracing upwards, from each node at a bottom layer (that is, each leaf node) in a diagram of the semantic hierarchical relationship, to find a path to a node at the top layer (that is, a root node), where two parent nodes are combined as one node in case of being synonymous; (2) calculating, for a path, a weight of each node according to a layer at which said node is located and a quantity of all nodes subordinating to said node in the diagram of semantic hierarchical relationship. As a basic concept, the weight of a node is greater in a case that such node expresses more precise information, that is, larger quantity of information.

An example of constructing a WSP is shown in Figure 6. The WSP may have two functions: (1) ensuring that two tags from a same semantic path are simultaneously selected in cDPP sampling; (2) calculating a sum of weights of tags in each subset for multiple tag subsets obtained through cDPP sampling, and selecting a tag subset maximum in weight as a final output. The cDPP is a probability model, and randomness is provided by sampling according to the probability model. Therefore, multiple different tag subsets can be generated..

Figure 7 is a schematic diagram of a process of training a generative adversarial network model according to an embodiment of the present disclosure. First, a cDPP sequential sampling process based on the weighted semantic path (WSP) is illustrated. Then, a sequential sampling process using the WSP and the cDPP is described, and the sequential sampling process generates a tag subset with distinctness in semantics. Main steps are as follows.

In step 1, the terminal inputs x, W, S, k, and WSP, where k represents a maximum quantity of tags for a single tag subset.

In step 2, the terminal calculates the kernel matrix L, to obtain a probability distribution of cDPP.

In step 3, the terminal performs sequential sampling according to the probability distribution of cDPP. In each step of the sampling, it is determined through the WSP whether a tag newly acquired in sampling and a sampled tag (that is, a tag acquired in a sampling step previous to the current sampling step in the sequential sampling) are from a same semantic path. The tag newly acquired in sampling is discarded and re-sampled, in case of a positive determination. The tag newly acquired in sampling is reserved and a next tag is sampled, in case of a negative determination. The sequential sampling does not stop until k tags are obtained.

In step 4, the sampling operation in the step 3 is repeated to obtain 10 tag subsets, a sum of weights of tags in each subset is calculated through the WSP, and a subset maximum in weight is selected as a final output.

A tag subset with distinctness can be generated through the foregoing sampling process.

Hereinafter described is generation of multiple tag subsets with diversity, where it is illustrated how to simulate multiple manually-generated tag subsets with diversity. One solution is repeating the sequential sampling process described in the foregoing embodiment for multiple times, to select multiple different tag subsets. Nevertheless, there is little difference between tag subsets that are obtained through sampling using a same cDPP probability distribution, and such difference is much smaller than a difference between subsets obtained from different annotators. In embodiments of the present disclosure, a cDPP probability distribution with a fixed parameter may be treated as annotation logic of a single annotator. Although different tag subsets may be obtained at different times by a same annotator for a same image, such differences are small.

Therefore, it is necessary to obtain multiple different cDPP probability distributions, so as to simulate annotation logic of different annotators. Such objective is achieved by using a generative adversarial network (GAN) according to an embodiment of the present disclosure. A main process of implementation is as follows. A piece of random noise is introduced and combined with an input image, a hybrid feature of the random noise and the image is mapped into a cDPP probability distribution through a generator. Multiple pieces of random noise are generated and mapped into cDPP probability distributions with different parameters.

Hereinafter a D2IA-GAN model as shown in Figure 7 is described in detail. The D2IA-GAN model includes two parts, i.e. a generator and a discriminator.

As shown in Figure 7, the generator is constructed as follows.

(1) A feature vector f of an image *I* is extracted by using a convolutional neural network (CNN).
(2) A noise vector z is acquired through uniform sampling within a range of [-1, 1].
(3) A long vector is acquired by concatenating f and z, and inputted into a DPP model, to obtain a DPP probability distribution.
(4) The sampling process in the foregoing embodiment is performed based on the DPP probability distribution and the weighted semantic path (WSP), to obtain a tag subset with distinctness.

A mathematical expression of the generator is as follows.

$$\mathcal{G}_{\boldsymbol{\theta}}(I, \mathbf{z}; \mathbf{S}_{\mathcal{T}}, SP_{\mathcal{T}}, k) \sim \mathcal{S}_{\text{k-DPP}, SP_{\mathcal{T}}}\left(\sqrt{\mathbf{q}_{\mathcal{T}}(I, \mathbf{z})}, \mathbf{S}_{\mathcal{T}}\right),$$

The term on a left side of "∼" represents a generator G, and the term on a right side of "∼" represents a sampling process.

$\mathbf{q}_{\mathcal{T}}(I, \mathbf{z})$ represents a marginal probability for tags in the cDPP model. $\mathbf{S}_{\mathcal{T}}$ represents a correlation matrix among tags in a tag set $\mathcal{T}$. $\mathcal{S}_{\text{k-DPP}, SP_{\mathcal{T}}}$ represents the sampling process according to the foregoing embodiment.

As shown in Figure 7, the discriminator is constructed as follows.

(1) For a tag subset generated by the generator, a vector t representing each tag is generated through the GloVe algorithm.
(2) f and t are concatenated and then inputted into a sigmoid function, to obtain a score in a range of [0, 1], where 1 represents that the tag is completely correlated to the image, and 0 represents that the tag is completely uncorrelated to the image.
(3) A correlation score between each tag and the image is calculated, and an average of the correlation scores corresponding to all tags in the subset is calculated as a correlation score between the subset and the image.

A mathematical expression of the discriminator is as follows.

$$\mathcal{D}_{\boldsymbol{\eta}}(I, T) = \frac{1}{|T|} \sum_{i \in T} \sigma\left(\mathbf{w}_{\mathcal{D}}^{\top}[f_{\mathcal{D}}(I); \boldsymbol{t}_i] + b_{\mathcal{D}}\right),$$

$\sigma$ represents the sigmoid function. $\mathcal{D}_{\boldsymbol{\eta}}(I, T)$ represents the discriminator, which is configured to give a correlation score between the image $I$ and the tag subset $T$. The parameter $\eta$ includes $\mathbf{w}_{\mathcal{D}} \in \mathbb{R}^{|f_{\mathcal{D}}(I)|+50}$, $b_{\mathcal{D}} \in \mathbb{R}$, and a parameter of a CNN model in the discriminator, where the CNN model is for extracting the image feature $f_{\mathcal{D}}(I)$.

Hereinafter a process of training the D2IA-GAN model is illustrated.

A general method for training a GAN model applies an alternate updating manner. $\mathcal{G}_{\boldsymbol{\theta}}$ is optimized with a given $\mathcal{D}_{\boldsymbol{\eta}}$, and $\mathcal{D}_{\boldsymbol{\eta}}$ is optimized with a given $\mathcal{G}_{\boldsymbol{\theta}}$, until convergence is reached.

$\mathcal{G}_{\boldsymbol{\theta}}$ is optimized as follows with a given $\mathcal{D}_{\boldsymbol{\eta}}$.

$$\min_{\boldsymbol{\theta}} \mathbb{E}_{\mathbf{z} \sim \text{U}[-1,1]}\left[\log\left(1 - D_{\boldsymbol{\eta}}\left(I, \mathcal{G}_{\boldsymbol{\theta}}(I, \mathbf{z})\right)\right)\right]$$

The above target function is minimized, to maximize a correlation (measured by $\mathcal{D}_{\boldsymbol{\eta}}$) between a tag subset generated by the generator $\mathcal{G}_{\boldsymbol{\theta}}(I, \mathbf{z})$ and the image $I$. A discrete sampling procedure $\mathcal{S}_{\text{k-DPP}, SP_{\mathcal{T}}}$ is included in the generator based on the aforementioned definition of $\mathcal{G}_{\boldsymbol{\theta}}(I, \mathbf{z})$, and therefore the target function cannot be optimized through a conventional continuous optimization method. In order to address such issue, an algorithm of policy gradient (PG) in reinforcement learning is applied in embodiments of the present disclosure. The discrete sampling procedure is considered to be a process of generating a sequence, and such process is controlled by a continuous policy function.

The policy function is capable to measure a possibility of selecting a next tag based on the image *I* and a sampled tag.

It is assumed that $T_{\mathcal{G}}$ is a tag subset obtained through sampling,

$$T_{\mathcal{G}} = \{y_{[1]}, y_{[2]}, \ldots, y_{[k]}\},$$

where [i] represents a sequential number in the sampling, and

$$T_{\mathcal{G}-i} = \{y_{[1]}, \ldots, y_{[i]}\},$$

$i \le k$ represents a tag subset obtained through the first i steps in the sampling. A given z is sampled within the range of [-1, 1], and the above target function may be initially simulated as follows.

$$\mathcal{J}_{\boldsymbol{\theta}}(T_{\mathcal{G}}) = \sum_{i=1}^{k} \mathcal{R}(I, T_{\mathcal{G}-i}) \log \Big( \prod_{t_1 \in T_{\mathcal{G}-i}} q_{t_1}^1 \prod_{t_2 \in \mathcal{T} \setminus T_{\mathcal{G}-i}} q_{t_2}^0 \Big),$$

$$\mathcal{T} \setminus T_{\mathcal{G}-i}$$

represents other tags other than

$$T_{\mathcal{G}-i}$$

in $\mathcal{T}$.

$$q_t^1 = \sigma\big(\mathbf{w}_t^{\top}[f_{\mathcal{G}}(I); \mathbf{z}] + b_{\mathcal{G}}(t)\big)$$

represents a marginal probability of selecting the tag *t*, and $q_t^0 = 1 - q_t^1$. A reward function $\mathcal{R}(I, T_{\mathcal{G}})$ encourages a high correlation between content of the image *I* and the tag subset $T_{\mathcal{G}}$. An expression of the reward function is as follows.

$$\mathcal{R}(I, T_{\mathcal{G}}) = -\log\big(1 - \mathcal{D}_{\boldsymbol{\eta}}(I, T_{\mathcal{G}})\big),$$

Compared with a standard continuous policy function, a return is replaced with in the reward function $\mathcal{R}(I, T_{\mathcal{G}})$ in this embodiment of the present disclosure, and an original policy probability is replaced with a decomposed probability

$$\prod_{t_1 \in T_{\mathcal{G}-i}} q_{t_1}^1 \prod_{t_2 \in \mathcal{T} \setminus T_{\mathcal{G}-i}} q_{t_2}^0.$$

Therefore, it is convenient to calculated a gradient

$$\frac{\partial \mathcal{J}_{\boldsymbol{\theta}}(T_{\mathcal{G}})}{\partial \boldsymbol{\theta}}.$$

Based on such gradient, $\theta$ may be updated through a back-propagation algorithm and a stochastic gradient descent algorithm.

$\mathcal{D}_\eta$ is optimized as follows with a given $\mathcal{G}_\theta$.

$$\max_{\boldsymbol{\eta}} \frac{1}{|S_{DD-I}|} \sum_{T \in S_{DD-I}} \left[ \beta \log \mathcal{D}_{\boldsymbol{\eta}}(I, T) - (1 - \beta) \right.$$

$$\left. \left( \mathcal{D}_{\boldsymbol{\eta}}(I, T) - F_{1-sp}(I, T) \right)^2 \right] + \beta \log \left( 1 - \mathcal{D}_{\boldsymbol{\eta}}(I, T_{\mathcal{G}}) \right) -$$

$$(1 - \beta) \left( \mathcal{D}_{\boldsymbol{\eta}}(I, T_{\mathcal{G}}) - \mathbf{F}_{1-sp}(I, T_{\mathcal{G}}) \right)^2$$

$F_{1-sp}(I, T)$ represents an F1 index based on the WSP, and is configured to measure a correlation between the image $I$ and the tag subset $T$. The F1 index further serves one of quantitative measurement criteria. It is very convenient to calculate a gradient of the above target function with respect to $\eta$, and $\eta$ may be optimized through a stochastic gradient ascent algorithm.

Hereinafter the method for image annotation according to this embodiment of the present disclosure is tested in an experiment.

First, the experiment is configured as follows. Experiment datasets are described in in Table 1. Methods for automatic image annotation used in contrast include ML-MG, LEML, and DIA. Distinctness of tags is not considered in ML-MG and LEML, and thereby only a posterior probability for each tag is outputted. For a fair comparison, the posterior probabilities outputted in ML-MG and LEML are treated as the marginal probability q in the DPP model, and then cDPP sampling based on the WSP is performed on such basis. Therefore, the ML-MG and LEML are replaced by MLMG-DPP and LEML-DPP in this embodiment of the present disclosure. Semantic accuracy $P_{sp}$, a semantic recall rate $R_{sp}$, and a semantic F1 index $F_{1-sp}$ serve as measurement criteria for experiment results. In a conventional measurement criterion, a tag is considered as a unit for measurement. In a semantic criterion, a semantic path is considered as a unit for measurement, and weights of different nodes in the semantic path are considered. Compared with the conventional measurement criterion, the semantic criterion is capable to measure the distinctness and the diversity of a predicted tag subset more accurately, and is closer to a standard in manual measurement.

Table 1: Experiment dataset

| Dataset | Training images | Test images | Quantity of tags | Dimensions of Features | Semantic paths | Semantic paths for each image |
|---|---|---|---|---|---|---|
| ESP Game | 18689 | 2081 | 268 | 597 | 106 | 4.56 |
| IAPRTC-12 | 17495 | 1957 | 291 | 536 | 139 | 5.85 |

Hereinafter the results of comparison in experiments are objectively quantified. The comparison in experiment on the ESP Game is shown in Table 2. "3 tags" represents each tag subset including at most three tags during sampling, and "5 tags" represents each tag subset including at most five tags. "Single subset" refers to obtaining ten tag subsets in each method after sampling for ten times, and selecting a subset maximum in a sum of tag weights (weights of tags in the WSP) to be an output for measurement. "Ensemble subset" refers to selecting former five subsets maximum in a sum of tag weights, from the ten subsets, and fusing the tags of the five subsets into a large subset for measurement.

The results in Table 2 indicate that the method in this embodiment of the present disclosure, that is, D2IA-GAN, is better than other methods in most evaluation indexes. The results in experiment on IAPRTC-12 are shown in Table 3, where D2IA-GAN also achieves an excellent effect.

Table 2: Results of experiment on ESP Game

| evaluation target | metric→ method↓ | 3 tags | | | 5 tags | | |
|---|---|---|---|---|---|---|---|
| | | $P_{sp}$ | $R_{sp}$ | $F_{1-sp}$ | $P_{sp}$ | $R_{sp}$ | $F_{1-sp}$ |
| single subset | LEML-DPP [31] | 34.64 | 25.21 | 27.76 | 29.24 | 35.05 | 30.29 |
| | MLMG-DPP [26] | 37.18 | 27.71 | 30.05 | 33.85 | 38.91 | 34.30 |
| | DIA [23] | 41.44 | 31.00 | 33.61 | 34.99 | 40.92 | 35.78 |
| | D²IA-GAN | **42.96** | **32.34** | **34.93** | **35.04** | **41.50** | **36.06** |
| ensemble subset | LEML-DPP [31] | 34.62 | 38.09 | 34.32 | 29.04 | 46.61 | 34.02 |
| | MLMG-DPP [26] | 30.44 | 34.88 | 30.70 | 28.99 | 43.46 | 33.05 |
| | DIA [23] | 35.73 | 33.53 | 32.39 | **32.62** | 40.86 | 34.31 |
| | D²IA-GAN | **36.73** | **42.44** | **36.71** | 31.28 | **48.74** | **35.82** |

Table 3: Results of experiment on IAPRTC-12

| evaluation target | metric→ method↓ | 3 tags | | | 5 tags | | |
|---|---|---|---|---|---|---|---|
| | | $P_{sp}$ | $R_{sp}$ | $F_{1-sp}$ | $P_{sp}$ | $R_{sp}$ | $F_{1-sp}$ |
| single subset | LEML-DPP [31] | 41.42 | 24.39 | 29.00 | 37.06 | 32.86 | 32.98 |
| | MLMG-DPP [26] | 40.93 | 24.29 | 28.61 | 37.06 | 33.68 | 33.29 |
| | DIA [23] | 42.65 | 25.07 | 29.87 | **37.83** | 34.62 | 34.11 |
| | D²IA-GAN | **43.57** | **26.22** | **31.04** | 37.31 | **35.35** | **34.41** |
| ensemble subset | LEML-DPP [31] | 35.22 | 32.75 | 31.86 | 32.28 | 39.89 | 33.74 |
| | MLMG-DPP [26] | 33.71 | 32.00 | 30.64 | 31.91 | 40.11 | 33.49 |
| | DIA [23] | **35.73** | 33.53 | 32.39 | **32.62** | 40.86 | 34.31 |
| | D²IA-GAN | 35.49 | **39.06** | **34.44** | 32.50 | **44.98** | **35.34** |

Hereinafter the results of comparison in experiments are subjectively quantified. A subjective test is further performed in this embodiment of the present disclosure, where human participates in evaluation of the results. The test is specifically configured as follows. Filtering is first performed. In this embodiment of the present disclosure, two groups of results from DIA and D2IA-GAN are provided for a same test image, and are measured in $F_{1-sp}$. A image is reserved for human subjective determination on which group of tags describes the image better, in a case that the F1 index of both groups of results are greater than 0.2 and a difference between the F1 indexes is greater than 0.15. The filtering is performed for following reasons. In a case that the F1 indexes of both groups of results are low, it indicates that neither group describes the image well, and even human cannot make a judgment. In a case that the F1 indexes of the two groups are too close, it indicates that the tags in the two groups may be similar, and it is difficult for human to make a judgment, such that human may select one group randomly. The image after filtering can ensure that the human judgment is accurate. In this embodiment of the present disclosure, it is evaluated by five people independently which of the two groups of results is better for each image, and a simple majority principle is applied to finally decided which group is better. Results of the human subjective evaluation are shown in Table 4 and Table 5 for the ESP Game and the IAPRTC-12. From the results, three conclusions can be drawn from this embodiment of the present disclosure. (1) For over 60% of images, the method of D2IA-GAN according to this embodiment of the present disclosure is better than DIA in results, from a human perspective. (2) For over 60% of images, the semantic F1 index is higher in results of D2IA-GAN than in results of DIA. (3) For over 60% or even 70% of images, a result of human evaluation is consistent with that of the F1-index evaluation. It is indicated that measurement through the semantic F1 index is accurate and capable to reflect a rule in human evaluation.

Table 4: Human subjective evaluation test on the ESP Game dataset

| # tags → | 3 tags | | | 5 tags | | |
|---|---|---|---|---|---|---|
| metric ↓ | DIA wins | D²IA-GAN wins | total | DIA wins | D²IA-GAN wins | total |
| human evaluation | 135 | 240 | 375 | 120 | 204 | 324 |
| $F_{1-sp}$ | 125 | 250 | 375 | 112 | 212 | 324 |
| consistency | 62 | 177 | 63.73% | 65 | 157 | 68.52% |

Table 5: Human subjective evaluation test on the IAPRTC-12 dataset

| # tags → | 3 tags | | | 5 tags | | |
|---|---|---|---|---|---|---|
| metric ↓ | DIA wins | D$^2$IA-GAN wins | total | DIA wins | D$^2$IA-GAN wins | total |
| human evaluation | 129 | 213 | 342 | 123 | 183 | 306 |
| $F_{1-sp}$ | 141 | 201 | 342 | 123 | 183 | 306 |
| consistency | 82 | 154 | 69.01% | 58 | 118 | 57.52% |

For concise description, the foregoing method embodiments are illustrated as a combination of a series of operations. Those skilled in the art could understand that the present disclosure is not limited to the described sequence of the operations, because some operations according to the present disclosure may be performed in another sequence or simultaneously. In addition, those skilled in the art should appreciate that each embodiment described in the description is exemplary, and a related operation or module may be dispensable to the present disclosure.

Hereinafter related apparatuses are further provided for better implementing foregoing solutions in embodiments of the present disclosure.

Reference is made to Figure 8-a. An apparatus 800 for image annotation is provided according to an embodiment of the present disclosure. The apparatus may be installed in a terminal. The apparatus may include: a feature extraction module 801, a noise input module 802, a distinct-tag generation module 803, and a diverse-tag generation module 804.

The feature extraction module 801 is configured to extract a visual feature of an image that is to be annotated, from the image through a generative adversarial network.

The noise input module 802 is configured to input M pieces of random noise sequentially into the generative adversarial network model, where M is a positive integer.

The distinct-tag generation module 803 is configured to, in a case that any piece of random noise is inputted into the generative adversarial network model, perform determinantal point process (DPP) processing on the visual feature and said piece of random noise through the generative adversarial network model to select N tag subsets randomly, and select a tag subset with distinctness from the N randomly selected tag subsets through the generative adversarial network model, where N is a positive integer.

The diverse-tag generation module 804 is configured to output M tag subsets with distinctness through the generative adversarial network model, after all the M pieces of random noise are inputted into the generative adversarial network model, where there is diversity among the M tag subsets.

In some embodiments of the present disclosure, the generative adversarial network model includes a generative network model and a discriminative network model. As shown in Figure 8-b, the apparatus 800 for image annotation further includes a model training module 805.

The feature extraction module 801 is further configured to obtain a sample image from a sample database, and extract a sample visual feature from the sample image through the generative network model, before extracting the visual feature of the image that is to be annotated from the image through the generative adversarial network.

The distinct-tag generation module 802 is further configured to perform the DPP processing on the sample visual feature and a single piece of random noise through the generative network model to select N sample tag subsets randomly, and select a sample tag subset with distinctness from the N sample tag subsets through the generative network model.

The model training module 805 is configured to train the generative network model and the discriminative network model alternately, by using the sample tag subset and the visual feature of the image.

In some embodiments of the present disclosure, the model training module 805 includes a tag obtaining unit 8051, a policy function obtaining unit 8052, a model updating unit 8053, a tag subset obtaining unit 8054, and a discrimination unit 8055, as shown in Figure 8-c.

The tag obtaining unit 8051 is configured to obtain, in current training for the generative network model, a sampled tag outputted by the generative network model in previous training.

The policy function obtaining unit 8052 is configured to obtain a policy function through a reinforcement learning algorithm, where the policy function is configured to measure a probability of outputting a next tag based on the sample image and the sampled tag by the generative network model.

The model updating unit 8053 is configured to update the generative network model based on a gradient of the policy function.

The tag subset obtaining unit 8054 is configured to obtain the sample tag subset with distinctness in the current training for the discriminative network model, where the sample tag subset with distinctness is outputted by the generative network model that has been trained in the current training.

The discrimination unit 8055 is configured to perform discrimination on the sample tag subset and the sample visual feature through the discriminative network model, and output a result of the discrimination.

In some embodiments of the present disclosure, the policy function obtaining unit 8052 includes a correlation-degree function determining subunit 80521, a reward function determining subunit 80522, and a policy function obtaining subunit, as shown in Figure 8-d.

The correlation-degree function determining subunit 80521 is configured to determine a correlation-degree function between the sampled tag and the sample image through the generative network model.

The reward function determining subunit 80522 is configured to obtain a reward function according to the correlation-degree function between the sampled tag and the sample image.

The policy function obtaining subunit 80523 is configured to obtain the policy function according to the reward function and a marginal probability of selecting the next tag.

In some embodiments of the present disclosure, the discrimination unit 8055 includes a vectorizing subunit 80551, a tag-correlation-score obtaining subunit 80552, and a subset-correlation-score obtaining subunit 80553, as shown in Figure 8-e.

The vectorizing subunit 80551 is configured to vectorize all sample tags in the sample tag subset, to obtain multiple sample tag vectors.

The tag-correlation-score obtaining subunit 80552 is configured to obtain correlation scores between the multiple sample tag vectors and a feature vector corresponding to the sample visual feature.

The subset-correlation-score obtaining subunit 80553 is configured to obtain a correlation score between the sample tag subset and the visual feature of the image, according to the correlation scores corresponding to the multiple sample tag vectors.

In some embodiments of the present disclosure, the distinct-tag generation module 803 includes a concatenating unit 8031, a correlation function obtaining unit 8032, a DPP processing unit 8033, a sampling unit 8034, and a path determining unit 8035, as shown in Figure 8-f.

The concatenating unit 8031 is configured to concatenate a feature vector corresponding to the visual feature and a noise vector corresponding to the single piece of random noise, to obtain a concatenated hybrid vector.

The correlation function obtaining unit 8032 is configured to obtain a correlation function according to a candidate tag set, where the correlation function is independent from the visual feature.

The DPP processing unit 8033 is configured to perform the DPP processing on the correlation function and the hybrid vector, through the generative adversarial network model, to obtain a probability distribution function.

The sampling unit 8034 is configured to perform sequential sampling according to the probability distribution function, to obtain a current tag and a sampled tag, where the sampled tag is obtained previous to the current tag in the sequential sampling.

The path determining unit 8035 is configured to determine, through a weighted semantic path (WSP), whether the current tag and the sampled tag are from a same semantic path.

The sampling unit 8034 is further configured to: discard the current tag and re-sample for the current tag in a case that the current tag and the sampled tag are from the same semantic path, and reserve the current tag and samples for a next tag in a case that the current tag and the sampled tag are not from the same semantic path, until a quantity of tags obtained through the sampling reaches a maximum tag quantity for a tag subset; and repeat the sampling in a case that the quantity of tags obtained through the sampling reaches the maximum tag quantity for the tag subset, until the N tag subsets are obtained.

In some embodiments of the present disclosure, the diverse-tag generation module 804 is specifically configured to: calculate a sum of weights corresponding to all tags in each of the N tag subsets, through the WSP, to obtain a total weight of tags corresponding to each of the N tag subsets; and select a tag subset maximum in the total weight, as the tag subset with distinctiveness, according to the total weight of tags corresponding to each of the N tag subsets.

In the above embodiments of the present disclosure, the visual feature of the image that is to be annotated is first extracted from the image through the generative adversarial network, and the M pieces of random noise are sequentially inputted into the generative adversarial network model. In a case that any piece of random noise is inputted into the generative adversarial network model, the determinantal point process (DPP) processing is performed on the visual feature and said piece of random noise through the generative adversarial network model to select N tag subsets randomly, and a tag subset with distinctness is selected from the N randomly selected tag subsets through the generative adversarial network model. After all the M pieces of random noise are inputted into the generative adversarial network model, M tag subsets with distinctness are outputted through the generative adversarial network model, where there is diversity among the M tag subsets. In embodiments of the present disclosure, the DPP processing can be performed on the visual feature of the image and each single piece of random noise, the N randomly selected tag subsets are outputted, and the tag subset with distinctness can be selected from the N tag subsets. In a case that the M pieces of random noise are inputted into the generative adversarial network model, the tag subsets with distinctness that correspond to all M pieces of random noise, respectively, can be outputted. Thereby, multiple tag subsets with distinctness and diversity are finally generated. An effect approximating manual image annotation is provided, and the image is comprehensively described.

A terminal is further provided according to an embodiment of the present disclosure, as shown in Figure 9. Only parts related to embodiments of the present disclosure are shown, to facilitate description. Specific technical details that are not disclosed may refer to the method embodiments of the present disclosure. The terminal may be a terminal device such as a mobile phone, a tablet computer, a personal digital assistant (PDA), a point of sales (POS), or a vehicle-mounted computer. For example, the terminal is a mobile phone.

Figure 9 is a block diagram of a part of a structure of the mobile phone that is related to the terminal according to this embodiment of the present disclosure. Referring to Figure 9, the mobile phone includes components such as a radio frequency (RF) circuit 1010, a memory 1020, an input unit 1030, a display unit 1040, a sensor 1050, an audio circuit 1060, a wireless fidelity (WiFi) module 1070, a processor 1080, and a power supply 1090. The mobile phone is not limited to the structure as shown in Figure 9. The mobile phone may include more or fewer components than those shown in the figure, some components may be combined, and a different layout for the components may be applied.

Hereinafter the components of the mobile phone are described in detail in conjunction with Figure 9.

The RF circuit 1010 may be configured to receive and transmit a signal in a process of receiving and transmitting information or a calling process. In particular, the RF circuit 1010 may be configured to receive send downlink information from a base station and send the downlink information to the processor 1080 for processing. In addition, the RF circuit may be configured to send uplink data to the base station. Generally, the RF circuit 1010 includes, but is not limited to, an antenna, at least one amplifier, a transceiver, a coupler, a low noise amplifier (LNA), a duplexer, and the like. The RF circuit 1010 may further communicate with a network and another device through wireless communication. The wireless communication may use any communications standard or protocol, including but not limited to the global system of mobile communication (GSM), the general packet radio service (GPRS), the code division multiple access (CDMA), the wideband code division multiple access (WCDMA), the Long Term Evolution (LTE), an email, a short messaging service (SMS), and the like.

The memory 1020 may be configured to store a software program and a module. The processor 1080 executes various functional applications of the mobile phone and processes data, by running the software program and the module that are stored in the memory 1020. The memory 1020 may mainly include a program storage area and a data storage area. The program storage area may store an operating system, an application program required by at least one function (such as a function of playing an audio and a function of displaying an image). The data storage area may store data (such as audio data and a phone book) created according to usage of the mobile phone. In addition, the memory 1020 may include a highspeed random access memory, and may include a non-volatile memory, such as at least one magnetic disk memory device, a flash memory device, or another non-volatile solid-state memory device.

The input unit 1030 may be configured to receive numeral or character information that is inputted, and generate an input of a key signal related to user setting and function control of the mobile phone. Specifically, the input unit 1030 may include a touch panel 1031 or another input device 1032. The touch panel 1031, also known as a touchscreen, may collect a touch operation performed by the user on or near the touch panel (for example, an operation performed by a user on the touch panel 1031 or near the touch panel 1031 by using any proper object or accessory, such as a finger or a stylus), and drive a corresponding connected apparatus according to a preset program. Optionally, the touch panel 1031 may include two parts: a touch detection apparatus and a touch controller. The touch detection apparatus detects a touch position of a user, detects a signal generated by a touch operation, and transmits the signal to the touch controller. The touch controller receives touch information from the touch detection apparatus, converts the touch information into a touch coordinate, and transmits the touch coordinate to the processor 1080. The touch controller may receive and execute a command transmitted by the processor 1080. In addition, the touch panel 1031 may be implemented in various types, such as a resistor type, a capacitor type, an infrared type, or a surface-acoustic-wave type. The input unit 1030 may include another input device 1032 besides the touch panel 1031. Specifically, the input device 1032 may include, but is not limited to, one or more of a physical keyboard, a function key (such as a volume control key or a power key), a trackball, a mouse, a joystick, or the like.

The display unit 1040 may be configured to display information inputted by a user or information provided to a user, and various menus of the mobile phone. The display unit 1040 may include a display panel 1041. Optionally, the display panel 1041 may be configured in a form such as a liquid crystal display (LCD), an organic light-emitting diode (OLED), or the like. Further, the touch panel 1031 may cover the display panel 1041. After detecting a touch operation on or near the touch panel 1031, the touch panel 1031 reports to the processor 1080 to determine a type of a touch event. Then, the processor 1080 provides corresponding visual output on the display panel 1041 according to the type of the touch event. Although configured as two independent components for input and output functions in Figure 9, the touch panel 1031 and the display panel 1041 may be integrated in some embodiments to implement the input and output functions of the mobile phone.

The mobile phone may further include at least one sensor 1050, for example, a light sensor, a motion sensor, or another sensor. Specifically, the light sensor may include an ambient light sensor and a proximity sensor. The ambient light sensor may adjust luminance of the display panel 1041 according to ambient brightness, and the proximity sensor

**EP 3 809 328 A1**

may turn off the display panel 1041 and/or backlight in a case that the mobile phone moves near an ear. An accelerometer sensor, which is a motion sensor, may detect accelerations in all directions (generally along three axes), and may detect magnitude and a direction of gravity when motionless. The accelerometer sensor may be applied to applications recognizing a mobile phone posture (such as switching between landscape and portrait states, relevant games, and magnetometer posture calibration), or to functions related to recognizing a vibration (such as a pedometer, and knocking). Other sensors such as gyroscopes, barometers, hygrometers, thermometers, and infrared sensors may be further provided to the mobile phone, which is not described in detail herein.

The audio circuit 1060, a loudspeaker 1061, and a microphone 1062 may provide audio interfaces between a user and the mobile phone. The audio circuit 1060 may transmit an electrical signal to the loudspeaker 1061, after converting received audio data. The loudspeaker 1061 converts the electrical signal into a voice signal for outputting. Moreover, the microphone 1062 converts a collected sound signal into an electrical signal. The audio circuit 1060 converts the electrical signal into audio data after receiving the electrical signal, and then outputs the audio data. Afterwards, the audio data is processed by the processor 1080, and is transmitted through the RF circuit 1010 to, for example, another mobile phone. Or, the audio data is outputted to the memory 1020 for further processing.

WiFi belongs to near field communication technology. The mobile phone may apply a WiFi module 1070 to help a user send or receive an email, browse a webpage, access streaming media, and the like. The WiFi module provides the user a wireless broadband access to the Internet. The WiFi module 1070, although shown in Figure 9, is a dispensable component of the mobile phone, and may be omitted on requirements without changing an essence of the present disclosure.

The processor 1080 is a control center of the mobile phone, and is connected to all parts of the entire mobile phone via various interfaces and lines. The processor 1080 runs or executes software program and/or module stored in the memory 1020, and invokes data stored in the memory 1020, so as implement various functions and data processing of the mobile phone and monitor the whole the mobile phone. Optionally, the processor 1080 may include one or more processing units. Preferably, an application processor and a modem processor may be integrated into the processor 1080. The application processor is mainly configured to process an operating system, a user interface, an application program, or the like. The modem processor is mainly configured to process wireless communications. The modem processor may not be integrated into the processor 1080.

The mobile phone further includes the power supply 1090 (such as a battery) for configured to power each component. In a preferable embodiment, the power supply may be logically connected to the processor 1080 via a power management system. Thereby, the power supply implements functions such as charging, discharging, and power consumption management, via the power management system.

Although not shown in the figure, the mobile phone may further include a camera, a Bluetooth module, or the like, which is not further described herein.

In an embodiment of the present disclosure, the processor 1080 included in the terminal further controls a process of the method for image annotation, which is performed by the terminal.

Figure 10 is a schematic structural diagram of a server according to an embodiment of the present disclosure. The server 1100 may vary greatly due to different configurations or performances, and may include one or more central processing units (CPU) 1122 (for example, one or more processors) and a memory 1132, and one or more storage media 1130 (for example, one or more mass storage devices) that store application programs 1142 or data 1144. The memory 1132 and the storage medium 1130 may be transient storage or permanent storage. The program stored in the storage medium 1130 may include one or more modules (not shown in the figure), and each module may include a series of instruction operations on the server. The central processing unit 1122 may be configured to communicate with the storage medium 1130, so as to perform the series of instruction operations in the storage medium 1130 on the server 1100.

The server 1100 may further include one or more power supplies 1126, one or more wired or wireless network interfaces 1150, one or more input/output interfaces 1158, and/or one or more operating systems 1141, such as Windows ServerTM, Mac OS XTM, UnixTM, LinuxTM, or FreeBSDTM.

The steps of the method for image annotation performed by the server in the foregoing embodiment may be based on the server structure as shown in Figure 10.

In addition, the apparatus embodiments described above is merely schematic. The units described as separate parts may or may not be physically separate, and parts displayed as units may or may not be physical units. They may be located in one position, or may be distributed on multiple network units. Some or all of the units may be selected on requirement to achieve objectives of solutions of the embodiments. In addition, a connection relationship between modules in the accompanying drawings of the apparatus embodiments of the present disclosure indicates that there is communication connection between the modules. The communication connection may be specifically implemented as one or more communications buses or signal cables. Those skilled in the art can understand and implement without creative efforts.

A storage medium is further provided according to another aspect of this embodiment. The storage medium stores a computer program, and the computer program when being run is configured to perform steps in any one of the foregoing method embodiments.

In an optional embodiment, the storage medium may store a computer program configured to perform following steps S1 to S4.

In step S1, a terminal extracts a visual feature of an image that is to be annotated, through a generative adversarial network.

In step S2, the terminal inputs M pieces of random noise sequentially into the generative adversarial network model, where M is a positive integer.

In step S3, the terminal performs determinantal point process (DPP) processing on the visual feature and a piece of random noise through the generative adversarial network model to select N tag subsets randomly, and selects a tag subset distinctness from the N randomly selected tag subsets through the generative adversarial network model, in a case that such piece of random noise is inputted into the generative adversarial network model, where N is a positive integer.

In step S4, the terminal outputs M tag subsets with distinctness through the generative adversarial network model, after all the M pieces of random noise are inputted into the generative adversarial network model, where there is diversity among the M tag subsets.

In an optional embodiment, those skilled in the art may understand that all or some of the steps of the methods in the foregoing embodiments may be implemented by a program instructing hardware related to a terminal device. The program may be stored in a computer-readable storage medium. The storage medium may include a flash disk, a read-only memory (ROM), a random access memory (RAM), a magnetic disk, an optical disc, or the like.

Based on the description of the foregoing implementations, those skilled in the art may clearly understand that the present disclosure may be implemented by software plus necessary universal hardware, or by dedicated hardware which includes a dedicated integrated circuit, a dedicated CPU, a dedicated memory, a dedicated component, or the like. Generally, any functions implemented by a computer program can be easily implemented by using corresponding hardware. Moreover, a specific hardware structure configured to achieve a same function may be in various forms, for example, in a form of an analog circuit, a digital circuit, or a dedicated circuit. For the present disclosure, a software program is a preferable implementation in most cases. Based on such an understanding, an essence or a part contributing to conventional technology may be implemented in the form of a software product. The software product is stored in a readable storage medium, such as a floppy disk, a USB flash drive, a removable hard disk, a read-only memory (ROM), a random access memory (RAM), a magnetic disk, or an optical disc of a computer. The software product includes several instructions for instructing a computer device (such as a personal computer, a server, or a network device) to perform the method described in embodiments of the present disclosure.

In summary, the above embodiments are only intended to describe the technical solutions of the present disclosure, and not to limit the present disclosure. Although the present disclosure is described in detail with reference to the above embodiments, those skilled in the art should understand that, modifications can be made to the technical solutions recorded in the above embodiments, or equivalent replacements can be made to some of the technical features thereof, and the modifications and the replacements will not make the corresponding technical solutions deviate from the spirit and the scope of the technical solutions of the embodiments of the present disclosure.

**Industrial Applicability**

In embodiments of the present disclosure, the visual feature of the image that is to be annotated is first extracted from the image through the generative adversarial network, and the M pieces of random noise are sequentially inputted into the generative adversarial network model. In a case that any piece of random noise is inputted into the generative adversarial network model, the determinantal point process (DPP) processing is performed on the visual feature and said piece of random noise through the generative adversarial network model to select N tag subsets randomly, and a tag subset with distinctness is selected from the N randomly selected tag subsets through the generative adversarial network model. After all the M pieces of random noise are inputted into the generative adversarial network model, M tag subsets with distinctness are outputted through the generative adversarial network model, where there is diversity among the M tag subsets. In embodiments of the present disclosure, the DPP processing can be performed on the visual feature of the image and each single piece of random noise, the N randomly selected tag subsets are outputted, and the tag subset with distinctness can be selected from the N tag subsets. In a case that the M pieces of random noise are inputted into the generative adversarial network model, the tag subsets with distinctness that correspond to all M pieces of random noise, respectively, can be outputted. Thereby, multiple tag subsets with distinctness and diversity are finally generated. An effect approximating manual image annotation is provided, and the image is comprehensively described.

**Claims**

1. A method for image annotation, comprising:

   extracting, by a terminal, a visual feature of an image that is to be annotated, from the image through a generative adversarial network;

   inputting, by the terminal, M pieces of random noise sequentially into the generative adversarial network model, wherein M is a positive integer;

   in a case that a piece of random noise is inputted into the generative adversarial network model:

   performing, by the terminal, determinantal point process, DPP, processing on the visual feature and said piece of random noise through the generative adversarial network model to select N tag subsets randomly, and

   selecting, by the terminal, a tag subset with distinctness, from the N randomly selected tag subsets through the generative adversarial network model,

   wherein N is a positive integer; and

   outputting, by the terminal, M tag subsets with distinctness through the generative adversarial network model, after all the M pieces of random noise are inputted into the generative adversarial network model, wherein there is diversity among the M tag subsets.

2. The method according to claim 1, wherein the generative adversarial network model comprises a generative network model and a discriminative network model; and

   wherein before extracting, by a terminal, the visual feature of the image that is to be annotated from the image through the generative adversarial network, the method further comprises:

   obtaining, by the terminal, a sample image from a sample database;

   extracting, by the terminal, a sample visual feature from the sample image through the generative network model;

   performing, by the terminal, the DPP processing on the sample visual feature and a single piece of random noise through the generative network model to select N sample tag subsets randomly;

   selecting, by the terminal, a sample tag subset with distinctness from the N sample tag subsets through the generative network model; and

   training, by the terminal, the generative network model and the discriminative network model alternately, by using the sample tag subset and the visual feature of the image.

3. The method according to claim 2, wherein training, by the terminal, the generative network model and the discriminative network model alternately by using the sample tag subset and the visual feature of the image comprises:

   obtaining, by the terminal in current training for the generative network model, a sampled tag outputted by the generative network model in previous training;

   obtaining, by the terminal, a policy function through a reinforcement learning algorithm, wherein the policy function is configured to measure a probability of outputting a next tag based on the sample image and the sampled tag by the generative network model;

   updating, by the terminal, the generative network model based on a gradient of the policy function;

   obtaining, by the terminal, the sample tag subset with distinctness in the current training for the discriminative network model, wherein the sample tag subset with distinctness is outputted by the generative network model that has been trained in the current training;

   performing, by the terminal, discrimination on the sample tag subset and the sample visual feature through the discriminative network model; and

   output, by the terminal, a result of the discrimination.

4. The method according to claim 3, wherein obtaining, by the terminal, the policy function through the reinforcement learning algorithm, comprises:

   determining, by the terminal, a correlation-degree function between the sampled tag and the sample image through the generative network model;

   obtaining, by the terminal, a reward function according to the correlation-degree function between the sampled tag and the sample image; and

obtaining, by the terminal, the policy function according to the reward function and a marginal probability of selecting the next tag.

5. The method according to claim 3, wherein performing, by the terminal, the discrimination on the sample tag subset and the sample visual feature through the discriminative network model comprises:

vectorizing, by the terminal, all sample tags in the sample tag subset to obtain a plurality of sample tag vectors;
obtaining, by the terminal, correlation scores between the plurality of sample tag vectors and a feature vector corresponding to the sample visual feature; and
obtaining, by the terminal, a correlation score between the sample tag subset and the visual feature of the image, according to the correlation scores corresponding to the plurality of sample tag vectors.

6. The method according to any one of claims 1 to 5, wherein performing, by the terminal, the DPP processing on the visual feature and said piece of random noise through the generative adversarial network model to select the N tag subsets randomly comprises:

concatenating, by the terminal, a feature vector corresponding to the visual feature and a noise vector corresponding to the single piece of random noise, to obtain a concatenated hybrid vector;
obtaining, by the terminal, a correlation function according to a candidate tag set, wherein the correlation function is independent from the visual feature;
performing, by the terminal, the DPP processing on the correlation function and the hybrid vector through the generative adversarial network model, to obtain a probability distribution function;
performing, by the terminal, sequential sampling according to the probability distribution function, to obtain a current tag and a sampled tag, wherein the sampled tag is obtained previous to the current tag in the sequential sampling;
determining, by the terminal through a weighted semantic path, WSP, whether the current tag and the sampled tag are from a same semantic path;
until a quantity of tags obtained through the sampling reaches a maximum tag quantity for a tag subset:

discarding, by the terminal, the current tag and re-sample for the current tag, in a case that the current tag and the sampled tag are from the same semantic path; and
reserving, by the terminal, the current tag and samples for a next tag, in a case that the current tag and the sampled tag are not from the same semantic path; and

repeating, by the terminal, the sampling in a case that the quantity of tags obtained through the sampling reaches the maximum tag quantity for the tag subset, until the N tag subsets are obtained.

7. The method according to claim 6, wherein selecting, by the terminal, the tag subset with distinctness from the N randomly selected tag subsets through the generative adversarial network model comprises:

calculating, by the terminal, a sum of weights corresponding to all tags in each of the N tag subsets, through the WSP, to obtain a total weight of tags corresponding to each of the N tag subsets; and
selecting, by the terminal, a tag subset maximum in the total weight as the tag subset with distinctiveness, according to the total weight of tags corresponding to each of the N tag subsets.

8. An apparatus for image annotation, installed in a terminal, wherein the apparatus comprises:

a feature extraction module, configured to extract a visual feature of an image that is to be annotated, from the image through a generative adversarial network;
a noise input module, configured to input M pieces of random noise sequentially into the generative adversarial network model, wherein M is a positive integer;
a distinct-tag generation module, configured to: in a case that a piece of random noise is inputted into the generative adversarial network model,

perform determinantal point process, DPP, processing on the visual feature and said piece of random noise through the generative adversarial network model to select N tag subsets randomly, and
select a tag subset with distinctness, from the N randomly selected tag subsets, through the generative adversarial network model,

wherein N is a positive integer; and

a diverse-tag generation module, configured to output M tag subsets with distinctness through the generative adversarial network model, after all the M pieces of random noise are inputted into the generative adversarial network model, wherein there is diversity among the M tag subsets.

9.  The apparatus according to claim 8, wherein:

the generative adversarial network model comprises a generative network model and a discriminative network model;
the image annotation apparatus further comprises a model training module;
the feature extraction module is further configured to obtain a sample image from a sample database, and extract a sample visual feature from the sample image through the generative network model, before extracting the visual feature of the image that is to be annotated from the image through the generative adversarial network;
the distinct-tag generation module is further configured to perform the DPP processing on the sample visual feature and a single piece of random noise through the generative network model to select N sample tag subsets randomly, and select a sample tag subset with distinctness from the N sample tag subsets through the generative network model; and
the model training module is configured to train the generative network model and the discriminative network model alternately, by using the sample tag subset and the visual feature of the image.

10.  The apparatus according to claim 9, wherein the model training module comprises:

a tag obtaining unit, configured to obtain, in current training for the generative network model, a sampled tag outputted by the generative network model in previous training;
a policy function obtaining unit, configured to obtain a policy function through a reinforcement learning algorithm, wherein the policy function is configured to measure a probability of outputting a next tag based on the sample image and the sampled tag by the generative network model;
a model updating unit, configured to update the generative network model based on a gradient of the policy function;
a tag subset obtaining unit, configured to obtain the sample tag subset with distinctness in the current training for the discriminative network model, wherein the sample tag subset with distinctness is outputted by the generative network model that has been trained in the current training; and
a discrimination unit, configured to perform discrimination on the sample tag subset and the sample visual feature through the discriminative network model, and output a result of the discrimination.

11.  The apparatus according to claim 10, wherein the policy function obtaining unit comprises:

a correlation-degree function determining subunit, configured to determine a correlation-degree function between the sampled tag and the sample image through the generative network model;
a reward function determining subunit, configured to obtain a reward function according to the correlation-degree function between the sampled tag and the sample image; and
a policy function obtaining subunit, configured to obtain the policy function according to the reward function and a marginal probability of selecting the next tag.

12.  The apparatus according to claim 10, wherein the discrimination unit comprises:

a vectorizing subunit, configured to vectorize all sample tags in the sample tag subset, to obtain a plurality of sample tag vectors;
a tag correlation score obtaining subunit, configured to obtain correlation scores between the plurality of sample tag vectors and a feature vector corresponding to the sample visual feature; and
a subset correlation score obtaining subunit, configured to obtain a correlation score between the sample tag subset and the visual feature of the image, according to the correlation scores corresponding to the plurality of sample tag vectors.

13.  The apparatus according to any one of claims 8 to 12, wherein the distinct-tag generation module comprises:

a concatenating unit, configured to concatenate a feature vector corresponding to the visual feature and a noise vector corresponding to the single piece of random noise, to obtain a concatenated hybrid vector;

a correlation function obtaining unit, configured to obtain a correlation function according to a candidate tag set, wherein the correlation function is independent from the visual feature;

a DPP processing unit, configured to perform the DPP processing on the correlation function and the hybrid vector, through the generative adversarial network model, to obtain a probability distribution function;

a sampling unit, configured to perform sequential sampling according to the probability distribution function, to obtain a current tag and a sampled tag, wherein the sampled tag is obtained previous to the current tag in the sequential sampling; and

a path determining unit, configured to determine, through a weighted semantic path, WSP, whether the current tag and the sampled tag are from a same semantic path; and

the sampling unit is further configured to:

until a quantity of tags obtained through the sampling reaches a maximum tag quantity for a tag subset:

discard the current tag and re-sample for the current tag in a case that the current tag and the sampled tag are from the same semantic path, and

reserve the current tag and samples for a next tag in a case that the current tag and the sampled tag are not from the same semantic path; and

repeat the sampling in a case that the quantity of tags obtained through the sampling reaches the maximum tag quantity for the tag subset, until the N tag subsets are obtained.

**14.** The apparatus according to claim 13, wherein the diverse-tag generation module is configured to:

calculate a sum of weights corresponding to all tags in each of the N tag subsets, through the WSP, to obtain a total weight of tags corresponding to each of the N tag subsets; and

select a tag subset maximum in the total weight, as the tag subset with distinctiveness, according to the total weight of tags corresponding to each of the N tag subsets.

**15.** An image annotation apparatus, comprising:

a processor; and
a memory, configured to store an instruction;
wherein the processor executes the instruction in the memory to perform the method according to any one of claims 1 to 7.

| Extract a visual feature of an image that is to be annotated, through a generative adversarial network | — 101 |

| Input M pieces of random noise sequentially into the generative adversarial network model, where M is a positive integer | — 102 |

| Perform determinantal point process (DPP) processing on the visual feature and a piece of random noise through the generative adversarial network model to select N tag subsets randomly, and select a tag subset distinctness from the N randomly selected tag subsets through the generative adversarial network model, in a case that said piece of random noise is inputted into the generative adversarial network model, where N is a positive integer | — 103 |

| Output M tag subsets with distinctness through the generative adversarial network model, after all the M pieces of random noise are inputted into the generative adversarial network model, where there is diversity among the M tag subsets | — 104 |

Figure 1

Figure 2

(a)Image

(b)A1

(c)A2

(d)A3

Figure 3

Figure 4

Figure 5

Improve quality                    Reduce diversity

Figure 6

| Semantic layer ( → )<br>Synonym ( — ) | Semantic paths of all tags | Semantic path of a single tag |
|---|---|---|

Person — People

Woman — Boy

Lady

$\mathcal{T}$ = Person, people, woman, boy, lady

Person, people
$(2, 3, 0.1633)$
Woman $(1,1,0.7)$
Lady $(0,0,1)$

Person, people
$(1, 3, 0.2333)$
Boy $(0,0,1)$

(Layering, #descendants, proportion)

people, person
$(0.2333, 0.2333)$
woman $(1)$
(Proportion)

$\mathcal{Y}$ = {Person, people, woman}

Figure 7

800

Apparatus for image annotation

801 Feature extraction module — 802 Noise input module — 803 Distinct tag generation module — 804 Diverse tag generation module

Figure 8-a

800

Apparatus for image annotation

801 Feature extraction module — 802 Noise input module — 803 Distinct tag generation module — 804 Diverse tag generation module

805 Model training module

Figure 8-b

805

Model training module

| 8051 | 8052 | 8053 | 8054 |
|---|---|---|---|
| Tag obtaining unit | Policy function obtaining unit | Model updating unit | Tag subset obtaining unit |

8055

Discrimination unit

Figure 8-c

8052

Policy function obtaining unit

| 80521 | 80522 | 80523 |
|---|---|---|
| Correlation-degree function determining subunit | Reward function determining subunit | Policy function obtaining subunit |

Figure 8-d

8055

Discrimination unit

| 80551 | 80552 | 80553 |
|---|---|---|
| Vectorizing subunit | Tag-correlation-score obtaining subunit | Subset-correlation-score obtaining subunit |

Figure 8-e

803

Distinct tag generation module

8031

Concatenating unit

8032

Correlation function obtaining unit

8033

DPP processing unit

8034

Sampling unit

8035

Path determining unit

Figure 8-f

1010 RF circuit

WiFi module 1070

1090

Power supply

1080

Processor

1060

Audio circuit

Speaker 1061

Microphone 1062

1020

Memory

Sensor 1050

Input unit 1031

Touch panel

1030

Another input device

Display unit

Display panel 1040

1032

1041

Figure 9

31

Figure 10

<div align="center">**INTERNATIONAL SEARCH REPORT**</div>

| International application No. |
|---|
| **PCT/CN2019/086372** |

**A. CLASSIFICATION OF SUBJECT MATTER**

G06K 9/62(2006.01)i

According to International Patent Classification (IPC) or to both national classification and IPC

**B. FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI: 图像, 图片, 生成对抗网络, 标注, 行列式点过程, 标签, 子集, image, picture, GAN, generative adversarial networks, annotation, DPP, determinantal point process, tag, subset

**C. DOCUMENTS CONSIDERED TO BE RELEVANT**

| Category* | Citation of document, with indication, where appropriate, of the relevant passages | Relevant to claim No. |
|---|---|---|
| X | 吴宝元等 (WU, Baoyuan et al.). "Tagging Like Humans: Diverse and Distinct Image Annotation" *https://arxiv.org/abs/1804.00113*, 31 March 2018 (2018-03-31), sections 1-5 | 1-15 |
| A | CN 107330444 A (SUZHOU UNIVERSITY OF SCIENCE AND TECHNOLOGY) 07 November 2017 (2017-11-07) entire document | 1-15 |
| A | CN 107622104 A (MINZU UNIVERSITY OF CHINA) 23 January 2018 (2018-01-23) entire document | 1-15 |
| A | US 2017365038 A1 (FACEBOOK INC.) 21 December 2017 (2017-12-21) entire document | 1-15 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **16 July 2019** | **30 July 2019** |

| Name and mailing address of the ISA/CN | Authorized officer |
|---|---|
| **State Intellectual Property Office of the P. R. China** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/086372**

| Patent document cited in search report | | | Publication date (day/month/year) | Patent family member(s) | | | Publication date (day/month/year) |
|---|---|---|---|---|---|---|---|
| CN | 107330444 | A | 07 November 2017 | None | | | |
| CN | 107622104 | A | 23 January 2018 | None | | | |
| US | 2017365038 | A1 | 21 December 2017 | US | 10319076 | B2 | 11 June 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2018106226264